(19) Europäisches Patentamt
European Patent Office
Office européen des brevets

(11) **EP 3 637 323 A1**

(12) **EUROPEAN PATENT APPLICATION**
published in accordance with Art. 153(4) EPC

(43) Date of publication:
**15.04.2020 Bulletin 2020/16**

(51) Int Cl.:
**G06N 3/02** (2006.01)

(21) Application number: **18877148.9**

(22) Date of filing: **03.04.2018**

(86) International application number:
**PCT/JP2018/014304**

(87) International publication number:
**WO 2019/092900 (16.05.2019 Gazette 2019/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.11.2017 JP 2017217037**

(71) Applicant: **Araya Inc.**
**Tokyo 1076024 (JP)**

(72) Inventors:
• **MATSUMOTO Wataru**
  **Tokyo 105-0001 (JP)**
• **MIZUTANI Hiromitsu**
  **Tokyo 105-0001 (JP)**
• **SETO Hiroki**
  **Tokyo 105-0001 (JP)**
• **YASUMOTO Masahiro**
  **Tokyo 105-0001 (JP)**

(74) Representative: **Dennemeyer & Associates S.A.**
**Postfach 70 04 25**
**81304 München (DE)**

(54) **INFORMATION PROCESSING DEVICE AND INFORMATION PROCESSING METHOD**

(57) An information processing device is applied to computation of a network connecting nodes of a neural network. A number of rows or a number of columns of a weighting matrix of the network is made a number of rows or a number of columns reduced from a number of rows or a number of columns determined by input data or output data. Then, a weight component of the reduced number of rows or number of columns is multiplied with a vector of the input data, a matrix of the results of the multiplication is divided into a partial matrix for every certain number of columns or number of rows, and a sum of matrices is taken for every partial matrix obtained by the dividing.

FIG. 11

EP 3 637 323 A1

**Description**

TECHNICAL FIELD

The present invention relates to an information processing device and an information processing method for performing computation of a neural network used for artificial intelligence, particularly to a technology for reducing the amount of computation when performing computation of a neural network.

BACKGROUND ART

Neural networks (hereafter referred to as "NN") that have particularly high recognition performance and prediction performance, such as deep neural networks (hereafter referred to as "DNN") with a deep layer structure and convolutional neural networks (hereafter referred to as "CNN"), are provided via internet services or clouds or by being mounted on equipment, in the form of applications for smartphones, vehicle equipment, household electrical equipment, factory equipment, robots, and the like.

CITATION LIST

NON-PATENT LITERATURE

NON-PATENT LITERATURE 1: Coates, Adam, Huval, Brody, Wang, Tao, Wu, David, Catanzaro, Bryan, and Andrew, Ng. "Deep learning with cots hpc systems." In Proceedings of The 30th International Conference on Machine Learning, pp.1337-1345, 2013.
NON-PATENT LITERATURE 2: R. Vershynin, On the role of sparsity in Compressed Sensing and Random Matrix Theory, CAMSAP' 09 (3rd International Workshop on Computational Advances in Multi-Sensor Adaptive Processing), 2009, 189--192.

SUMMARY

PROBLEMS TO BE SOLVED BY THE INVENTION

However, NNs such as DNNs and CNNs that are frequently adopted as implementations of typical artificial intelligence functionality have large amounts of computation, and require preparation of a large-scale server for a computer resource, or implementation of an additional unit, such as a graphics processing unit (hereafter referred to as "GPU"). Accordingly, there is a problem that the introduction of an intelligence installation or implementation of the same on equipment becomes expensive, or that large power consumption is required.

The present invention has been made in view of the above circumstance, and an object of the present invention is to provide an artificial intelligence function or service with which it is possible to achieve a decrease in size and power consumption and which can be mounted on general-purpose equipment, with greatly reduced computer resource by reducing the amount of computation of an NN such as a DNN or a CNN.

SOLUTION TO THE PROBLEMS

An information processing device of the present invention includes a computation processing unit for achieving an artificial intelligence function by performing computation of a neural network with respect to input data. The computation processing unit makes a number of rows or a number of columns of a weighting matrix for computing a network connecting nodes in the neural network a number of rows or a number of columns reduced from a number of rows or a number of columns determined by input data or output data, multiplies a weight component of the reduced number of rows or number of columns with a vector of the input data, divides a matrix of a result of the multiplication into a partial matrix for every certain number of columns or number of rows, and takes a sum of matrices for every partial matrix obtained by the dividing.

Moreover, an information processing method of the present invention features a computation processing method for achieving an artificial intelligence function by performing computation of a neural network with respect to input data. The information processing method includes: a reducing step of making a number of rows or a number of columns of a weighting matrix for computing a network connecting nodes in the neural network a number of rows or a number of columns reduced from a number of rows or a number of columns determined by input data or output data; a multiplication step of multiplying a weight component of the number of rows or the number of columns reduced in the reducing step with a vector of the input data; a dividing step of dividing a matrix of a result obtained in the multiplication step into a partial matrix for every certain number of columns or number of rows; and a sum-computing step of taking a sum of matrices for every partial matrix obtained by the dividing in the dividing step.

According to the present invention, it is possible to greatly reduce a computer resource for achieving an artificial intelligence function, making it possible to reduce the space occupied by the computer, or the price or power consumption thereof. Accordingly, when an artificial intelligence function is mounted on equipment, it becomes possible to perform computation of a neural network by using low-priced CPUs or general-purpose field-programable gate arrays (FPGA) or LSIs, thus achieving a decrease in size, price, and power consumption and an increase in speed.

BRIEF DESCRIPTION OF THE DRAWINGS

Fig. 1 illustrates an example of the structure of a DNN.
Fig. 2 illustrates an example of pretraining (performed for each layer) in an autoencoder.
Fig. 3 illustrates an example of recognition of a handwritten numeral by the present invention.
Fig. 4 illustrates how a vector of an intermediate node of the DNN is obtained.
Fig. 5 schematically illustrates a compressed state according to a first embodiment of the present invention.
Fig. 6 schematically illustrates a divided state according to the first embodiment of the present invention.
Fig. 7 illustrates a computation example for performing shifting according to the first embodiment of the present invention.
Fig. 8 illustrates a circuit configuration example for performing the computation of Fig. 7.
Fig. 9 illustrates a computation example for performing random permutation according to the first embodiment of the present invention.
Fig. 10 illustrates circuit configuration example for performing the computation of Fig. 9.
Fig. 11 illustrates flowcharts comparing the process flow (step S11 to S20) of a typical DNN and the process flow (step S21 to S31) according to the first embodiment of the present invention.
Fig. 12 illustrates a characteristics chart indicating an example of change in accuracy rate at compression ratios according to the first embodiment of the present invention.
Fig. 13 illustrates an example of a CNN structure.
Fig. 14 schematically illustrates a compressed state according to a second embodiment of the present invention.
Fig. 15 illustrates a concrete example of the compressed state according to the second embodiment of the present invention.
Fig. 16 compares a typical process (a) and a process (b) according to the second embodiment of the present invention.
Fig. 17 compares a typical process (a) with a process (b) according to the second embodiment of the present invention.
Fig. 18 illustrates flowcharts comparing the process flow (step S41 to S51) of a typical CNN and the process flow (step S61 to S73) according to the second embodiment of the present invention.
Fig. 19 illustrates a process according to a modification of an embodiment of the present invention.
Fig. 20 is a block diagram illustrating an example of hardware configuration to which an embodiment of the present invention is applied.

DESCRIPTION OF THE EMBODIMENTS

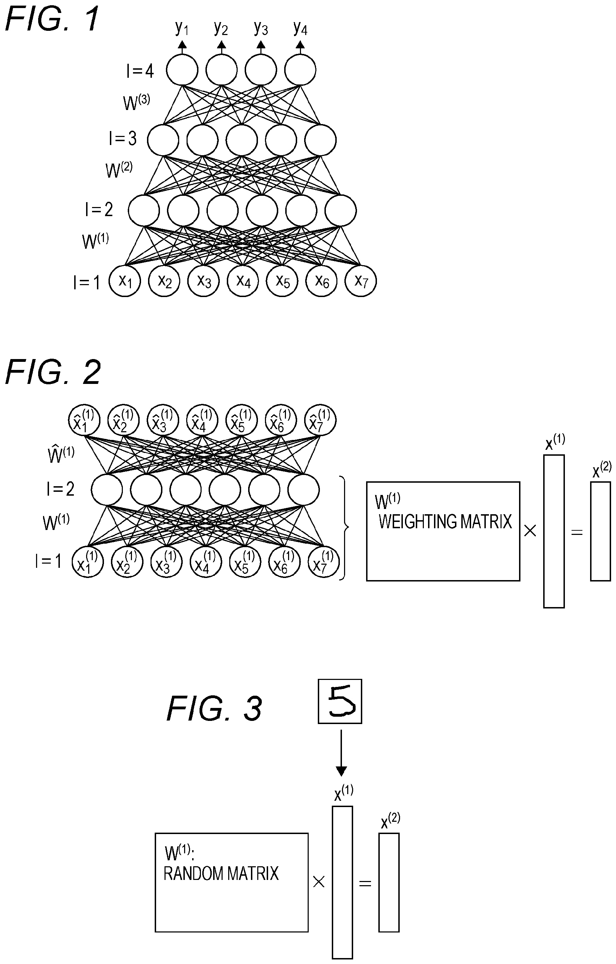

A first embodiment of the present invention will be described with reference to Fig. 1 to Fig. 12. The first embodiment is an example applied to a deep neural network (DNN).

Based on Fig. 1, the structure of the DNN will be defined. First, let the input signal be an N-dimension vector:

$$\mathbf{x} = (x_1, x_2, \cdots, x_N)^{\mathbf{T}} \in \mathbb{R}^N$$

where $(*)^{\mathrm{T}}$ indicates the transpose of a matrix. A multilayer structure is expressed using l indicating the index of layers such that l = 1, 2, 3, .... Also, $\mathbb{R}$ means a real number.

Let a vector

$$\mathbf{u}^{(l)} = \left( u_1^{(l)}, u_2^{(l)}, \cdots, u_J^{(l)} \right)^{\mathbf{T}} \in \mathbb{R}^J$$

be the vector of the sum of the weighting coefficients of the first layer to be computed as:

$$u_j^{(l)} = \sum_{i=1}^{J} w_{i,j}^{(l)} x_i^{(l)} + b_i^{(l)} .$$

Here,

$$\mathbf{W}^{(l)} = \begin{bmatrix} w_{1,1}^{(l)} & \cdots & w_{1,I}^{(l)} \\ \vdots & \ddots & \vdots \\ w_{J,1}^{(l)} & \cdots & w_{J,I}^{(l)} \end{bmatrix}$$

is a weighting matrix, and

$$\mathbf{b}^{(l)} = \left( b_1^{(l)}, b_2^{(l)}, \cdots, b_J^{(l)} \right)^{\mathbf{T}} \in \mathbb{R}^J$$

is a bias vector.

With respect to a given $u_j^{(l)}$, an activation function f generates the input vector $x_j^{(l+1)}$ of the next l + 1 layer by performing a computation $x_j^{(l+1)} = f(u_j^{(l)})$ for each node.

For simplified description, it will be hereafter assumed that $b_j^{(l)} = 0$ and f(u) = u.

Generally, a DNN performs pretraining by unsupervised learning using a stacked autoencoder, prior to supervised learning for identification. As illustrated in Fig. 2, in this autoencoder, the purpose is to acquire major information of an input signal of a higher dimension and to transform it into feature data of a lower dimension. In each layer, learning is performed so as to minimize the difference between data reconstructed by using the autoencoder and the input data. The learning is implemented by means of e.g. a gradient descent method or a backpropagation method, for each layer from a lower layer to an upper layer.

With respect to a network layer represented by $x^{(l+1)} = W^{(l)}x^{(l)}$, the weighting matrix

$$\widehat{\mathbf{W}}^{(l)}$$

is used to compute

$$\hat{\mathbf{x}}^{(l)} = \widehat{\mathbf{W}}^{(l)} \mathbf{x}^{(l+1)},$$

thereby generating, from $x^{(l+1)}$, a reconstruction vector

$$\hat{\mathbf{x}}^{(l)} .$$

During learning of the autoencoder, an optimization problem for determining

$$\underset{\{\mathbf{W}^{(l)}\}\{\widehat{\mathbf{W}}^{(l)}\}}{\mathrm{argmin}} \left\| \mathbf{x}^{(l)} - \hat{\mathbf{x}}^{(l)} \right\|_2^2$$

is solved so as to derive a weighting matrix

$$\mathbf{W}^{(l)} \approx \widehat{\mathbf{W}}^{(l)\mathrm{T}}$$

and

$$\mathbf{x}^{(l+1)}$$
,

where the length of the vector of $x^{(l)}$ is $J^{(l)}$.

Generally, because $J^{(l+1)} \le J^{(l)}$, the autoencoder reduces the dimension of data.

That is, this may be considered a problem to reconstruct the original signal $x^{(l)}$ from the dimensionally compressed signal $x^{(l+1)}$ using $W^{(l)}$.

Conversely, the weighting matrix $W^{(l)}$ only needs to have characteristics for reconstructing the original signal $x^{(l)}$ from the dimensionally compressed signal $x^{(l+1)}$.

For example, in the paper indicated as NON-PATENT LITERATURE 2, it is shown that it is possible to reproduce the original signal vector from a compressed-dimension vector using, for $W^{(l)}$, a matrix of which the components are randomly selected from a standard Gaussian distribution.

Here, referring to Fig. 3, an example in which the DNN has been applied for recognition of a handwritten numeral will be described.

For example, as illustrated in Fig. 3, assuming that the handwritten numeral "5" is expressed by a vector $x^{(1)}$, a dimensionally compressed vector $x^{(2)}$ is obtained by matrix multiplication with a random matrix $W^{(1)}$. It is shown that even when it is currently not known what picture the vector $x^{(1)}$ is like, the vector $x^{(1)}$ can be reproduced from the vector $x^{(2)}$ and the random matrix $W^{(1)}$, and that it is consequently possible to reproduce the handwritten numeral "5".

Meanwhile, techniques that satisfy the randomness of a weighting matrix other than the technique that randomly selects the matrix components are conceivable. The present invention indicates a configuration method focusing on this point.

A weighting matrix configuration method indicating this characteristic will be described below.

Here, an example will be described with reference to the DNN for use in recognizing a handwritten numeral, as illustrated in Fig. 3.

If the input signal is a handwritten character of a size of $28 \times 28 = 784$ pixels, the length of the vector of the input signal $x^{(1)}$ of the first layer is N = 784. If the length of the vector of the node $x^{(2)}$ of the second layer as an intermediate layer is M = 500, the $500 \times 784$ weighting matrix $W^{(1)}$ is multiplied by the input signal vector $x^{(1)}$, as illustrated in Fig. 3, whereby the signal $x^{(2)}$ of an intermediate node that has been compressed dimensionally is obtained.

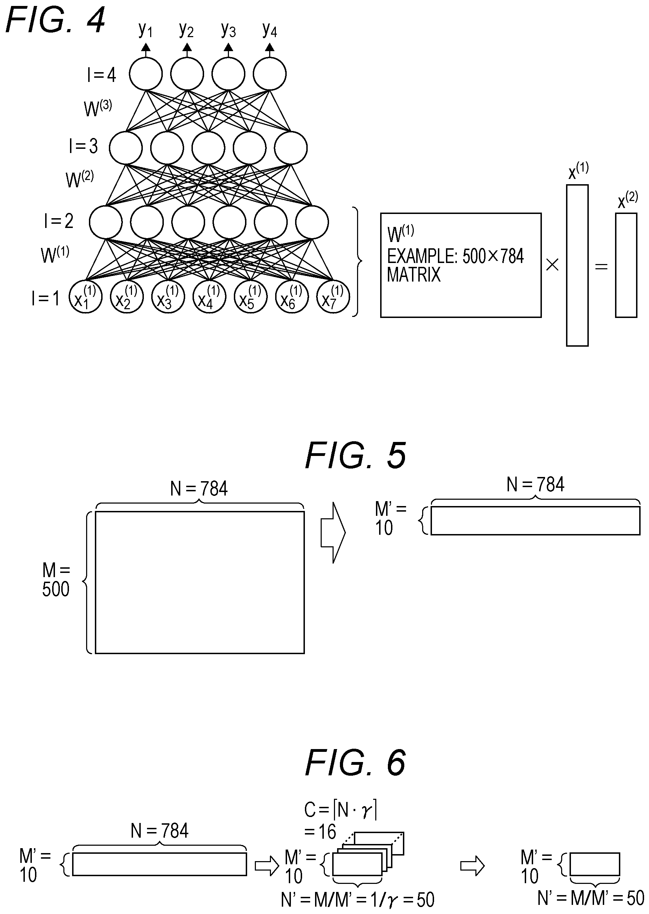

Fig. 4 illustrates how in this case the vector $x^{(2)}$ of the intermediate node is obtained by the matrix computation of the weighting matrix $W^{(1)}$ and the input signal vector $x^{(1)}$.

In this case, the number of times of multiplication involving a large amount of computation is $M \times N = 500 \times 784 = 392000$ times.

Fig. 4 and Fig. 5 illustrate a network compression method according to the present embodiment. Typical DNNs require the product with respect to the $M \times N$ components with respect to the input vector length N and the output vector length M for each layer, the number of times of taking the product resulting in an increase in the amount of computation.

In the present embodiment, a method for compressing the original weighting matrix of $M \times N = 500 \times 784$ to $M' \times N = 10 \times 784$ will be described, as illustrated in Fig. 5.

First, a weighting matrix which is compressed compared to a typical example is prepared, and a computing method under the compressed weighting matrix will be described. In addition, the reason why the computing method of the present invention results in hardly any decrease in accuracy will be described, and the relevant hardware configuration example and a flowchart example will be indicated.

Let the compressed weighting matrix be

$$\widetilde{\mathbf{W}}^{(1)}.$$

Also, when the compression ratio is expressed as $\gamma$, the compression ratio is $\gamma$ = M'/M = 10/500 = 1/50.

The weighting matrix

$$\widetilde{\mathbf{W}}^{(1)}$$

is used to perform the following computation:

$$\widetilde{\mathbf{W}}^{(1)\circ}\mathbf{x}^{(1)} = \begin{bmatrix} \widetilde{w}_{1,1}^{(1)} & \cdots & \widetilde{w}_{1,I}^{(1)} \\ \vdots & \ddots & \vdots \\ \widetilde{w}_{J,1}^{(1)} & \cdots & \widetilde{w}_{J,I}^{(1)} \end{bmatrix} \circ \begin{bmatrix} x_1^{(1)} & \cdots & x_I^{(1)} \end{bmatrix} = \begin{bmatrix} \widetilde{w}_{1,1}^{(1)} \cdot x_1^{(1)} & \cdots & \widetilde{w}_{1,I}^{(1)} \cdot x_I^{(1)} \\ \vdots & \ddots & \vdots \\ \widetilde{w}_{J,1}^{(1)} \cdot x_1^{(1)} & \cdots & \widetilde{w}_{J,I}^{(1)} \cdot x_I^{(1)} \end{bmatrix}$$

$$= \begin{bmatrix} \widetilde{w}_{1,1}^{(1)} \cdot x_1^{(1)} & \cdots & \widetilde{w}_{1,784}^{(1)} \cdot x_{784}^{(1)} \\ \vdots & \ddots & \vdots \\ \widetilde{w}_{10,1}^{(1)} \cdot x_1^{(1)} & \cdots & \widetilde{w}_{10,784}^{(1)} \cdot x_{784}^{(1)} \end{bmatrix},$$

where

$$\widetilde{\mathbf{W}}^{(l)} = \begin{bmatrix} \widetilde{w}_{1,1}^{(l)} & \cdots & \widetilde{w}_{1,I}^{(l)} \\ \vdots & \ddots & \vdots \\ \widetilde{w}_{J,1}^{(l)} & \cdots & \widetilde{w}_{J,I}^{(l)} \end{bmatrix},$$

and the operator °, with reference to

$$\mathbf{A}^{\circ}\mathbf{B}$$

where A is a matrix and B is a vector, indicates an operation for taking the product of the i-th column component of the matrix A and the i-th element of the vector B.

Next, as illustrated in Fig. 6, an M' $\times$ N = 10 $\times$ 784 matrix

$$\widetilde{\mathbf{W}}^{(l)}$$

is divided at every $1/\gamma$ = 50 columns into an M' $\times$ N' = 10 $\times$ 50 matrix

$$\widetilde{\mathbf{W}}_i^{(l)}$$

as follows:

$$\widetilde{W}_1^{(l)} \circ x_1^{(l)} = \begin{bmatrix} \widetilde{w}_{1,1}^{(l)} & \cdots & \widetilde{w}_{1,50}^{(l)} \\ \vdots & \ddots & \vdots \\ \widetilde{w}_{10,1}^{(l)} & \cdots & \widetilde{w}_{10,50}^{(l)} \end{bmatrix} \circ \begin{bmatrix} x_1^{(l)} & \cdots & x_{50}^{(l)} \end{bmatrix},$$

$$\widetilde{W}_2^{(l)} \circ x_2^{(l)} = \begin{bmatrix} \widetilde{w}_{1,51}^{(l)} & \cdots & \widetilde{w}_{1,100}^{(l)} \\ \vdots & \ddots & \vdots \\ \widetilde{w}_{10,51}^{(l)} & \cdots & \widetilde{w}_{10,100}^{(l)} \end{bmatrix} \circ \begin{bmatrix} x_{51}^{(l)} & \cdots & x_{100}^{(l)} \end{bmatrix},$$

$$\cdots,$$

$$\widetilde{W}_i^{(l)} \circ x_i^{(l)} = \begin{bmatrix} \widetilde{w}_{1,(i-1) \cdot N'+1}^{(l)} & \cdots & \widetilde{w}_{1,i \cdot N'}^{(l)} \\ \vdots & \ddots & \vdots \\ \widetilde{w}_{M',(i-1) \cdot N'+1}^{(l)} & \cdots & \widetilde{w}_{M',i \cdot N'}^{(l)} \end{bmatrix} \circ \begin{bmatrix} x_{(i-1) \cdot N'+1}^{(l)} & \cdots & x_{i \cdot N'}^{(l)} \end{bmatrix},$$

$$\cdots,$$

$$\widetilde{W}_{\lceil N \cdot \gamma \rceil}^{(l)} \circ x_{\lceil N \cdot \gamma \rceil}^{(l)} = \begin{bmatrix} \widetilde{w}_{1,(\lceil N \cdot \gamma \rceil - 1) \cdot N'+1}^{(l)} & \cdots & \widetilde{w}_{1,\lceil N \cdot \gamma \rceil \cdot N'}^{(l)} \\ \vdots & \ddots & \vdots \\ \widetilde{w}_{M',(\lceil N \cdot \gamma \rceil - 1) \cdot N'+1}^{(l)} & \cdots & \widetilde{w}_{M',\lceil N \cdot \gamma \rceil \cdot N'}^{(l)} \end{bmatrix} \circ \begin{bmatrix} x_{(\lceil N \cdot \gamma \rceil - 1) \cdot N'+1}^{(l)} & \cdots & x_{\lceil N \cdot \gamma \rceil \cdot N'}^{(l)} \end{bmatrix} \cdots (1)$$

In addition,

$$\widetilde{W}_1^{(l)} \circ x_1^{(l)}$$

and a matrix

$$\overline{\widetilde{W}_i^{(l)} \circ x_i^{(l)}}$$

that has been obtained by permutation or random permutation with respect to the same according to a specific rule are summed as follows. Here, permutation means that an operation in which the locations of arbitrary two elements of the matrix are exchanged with each other is performed an arbitrary number of times.

$$\dot{x}^{(l+1)} = \widetilde{W}_1^{(l)} \circ x_1^{(l)} + \overline{\widetilde{W}_2^{(l)} \circ x_2^{(l)}} + \cdots + \overline{\widetilde{W}_{\lceil N \cdot \gamma \rceil}^{(l)} \circ x_{\lceil N \cdot \gamma \rceil}^{(l)}} \cdots (2)$$

As a result, an M' × N' = 10 × 50 matrix

$$\dot{x}^{(l+1)}, l = 1$$

is output, as indicated in the right-side end of Fig. 6.

This matrix

$$\dot{x}^{(l+1)} = \begin{bmatrix} x_{1,1}^{(l+1)} & \cdots & x_{1,1/\gamma}^{(l+1)} \\ \vdots & \ddots & \vdots \\ x_{M \cdot \gamma,1}^{(l+1)} & \cdots & x_{M \cdot \gamma,1/\gamma}^{(l+1)} \end{bmatrix}$$

is transformed into a vector to construct

$$\mathbf{x}^{(l+1)} = \begin{bmatrix} x_{1,1}^{(l+1)} & \cdots & x_{1\frac{1}{\gamma}}^{(l+1)} & x_{2,1}^{(l+1)} & \cdots & x_{2\frac{1}{\gamma}}^{(l+1)} & \cdots & x_{M\gamma,1}^{(l+1)} & \cdots & x_{M\gamma,\frac{1}{\gamma}}^{(l+1)} \end{bmatrix}.$$

In the above example, $x^{(2)}$ of a vector length 500 is generated from the $10 \times 50$ matrix $X^{(2)}$.

Thus, it is possible to perform computation to output the signal of an intermediate node of 500 dimensions from the input signal of the same 784 dimensions as in the computation using the $500 \times 784$ weighting matrix $W^{(1)}$. Particularly, using the sum of matrices based on the combination of the permutated matrix

$$\overline{\widetilde{W}_l^{(l)} \circ \mathbf{x}_l^{(l)}},$$

it is possible to achieve characteristics close to a random matrix.

Consequently, in terms of recognition performance and prediction performance, there is only a slight performance difference between the typical method and the method of the present invention.

Meanwhile, according to the present embodiment, the number of times of multiplication involving a large amount of computation is M' × N = 10 × 784 = 7840 times, indicating the effect of reduction to $\gamma$ = 1/50 compared to the typical example of M × N = 500 × 784 = 392000 times.

For example, the original weighting matrix $W^{(1)}$ is $6 \times 9$, the vector length of the input signal vector $x^{(1)}$ is 9, and the vector length of the output vector $x^{(2)}$ is 6. For example, a computation

$$\mathbf{x}^{(2)} = \mathbf{W}^{(1)} \cdot \mathbf{x}^{(1)} = \begin{bmatrix} w_{1,1} & \cdots & w_{1,9} \\ \vdots & \ddots & \vdots \\ w_{6,1} & \cdots & w_{6,9} \end{bmatrix} \cdot \begin{bmatrix} x_1 \\ \vdots \\ x_9 \end{bmatrix} = \begin{bmatrix} w_{1,1} \cdot x_1 + w_{1,2} \cdot x_2 + \cdots + w_{1,9} \cdot x_9 \\ w_{2,1} \cdot x_1 + w_{2,2} \cdot x_2 + \cdots + w_{2,9} \cdot x_9 \\ \vdots \\ w_{6,1} \cdot x_1 + w_{6,2} \cdot x_2 + \cdots + w_{6,9} \cdot x_9 \end{bmatrix}$$

is performed. Generally, the weight is set in a range of $w_{i,j} \in [-1, 1]$. Here, if the variance value of distribution of the weights is large, the weights tend to take values such as -1 and 1, which may cause the vanishing gradient problem in which learning fails to converge during the learning process.

For example, if all of the weights of the first row and the second row of the above expression become 1,

$$w_{1,1} \cdot x_1 + w_{1,2} \cdot x_2 + \cdots + w_{1,9} \cdot x_9 = x_1 + x_2 + \cdots + x_9 \quad \cdots (3),$$

$$w_{2,1} \cdot x_1 + w_{2,2} \cdot x_2 + \cdots + w_{2,9} \cdot x_9 = x_1 + x_2 + \cdots + x_9 \quad \cdots (4).$$

As will be seen from the right side of the above expression, two identical equations would exist in an overlapping manner, so that the first element and the second element of $x^{(2)}$ that is output become the same, which means that one of the elements has been lost, resulting in a loss in the information of $x^{(2)}$ per se. That is, while $x^{(2)}$ originally has six elements, as the first element and the second element become the same, the information is reduced to that of five elements. A loss in the information in one layer for which the computation is performed leads to a loss in the information used for final identification, and therefore causes a decrease in identification performance. Meanwhile, if the weight $w_{i,j}$ had values such as -1 and 1, a loss in the elements of $x^{(2)}$ can still be prevented as long as a method is used that makes it possible to avoid the generation of the same equations from the beginning, providing the effect that the amount of information required for identification can be maintained and the accuracy of final identification is not lowered.

From this viewpoint, according to the technique adopted in the present invention, instead of taking the sum of the products of the components of each row of the weighting matrix $W^{(1)}$ and all of the elements of the vector $x^{(l)}$, a means is taken whereby the sum of the products of some of the elements is taken and a combination rule is made such that the equations do not overlap, thereby avoiding the generation of the identical equations. Initially, a weighting matrix

$$\widetilde{\mathbf{W}}^{(l)}$$

is made in which the number of rows has been compressed along the compression ratio, $W^{(1)}$ is divided at every inverse $1/\gamma$ of the compression ratio to compute

$$\widetilde{\mathbf{W}}_i^{(l)} \circ \mathbf{x}_i^{(l)}$$

as according to expression (1), and then, with respect to

$$\widetilde{\mathbf{W}}_i^{(l)} \circ \mathbf{x}_i^{(l)},$$

permutation or random permutation is performed according to a specific rule to obtain a matrix

$$\overline{\widetilde{\mathbf{W}}_i^{(l)} \circ \mathbf{x}_i^{(l)}},$$

and the matrices are summed as according to expression (2). These implementations may be performed using software, or hardware such as an FPGA.

As a concrete example, a case where $\gamma = 1/3$ will be described. First, the number of rows is made from 6 to the number of rows $6 \times \gamma = 2$ rows after compression. Then, the number of columns is divided at every $1/\gamma = 3$ columns, constructing $2 \times 3$ weighting matrices

$$\widetilde{\mathbf{W}}_1^{(1)} \text{、} \widetilde{\mathbf{W}}_2^{(1)} \text{、} \widetilde{\mathbf{W}}_3^{(1)}.$$

The vector length is computed using $x_1^{(1)}$, $x_2^{(1)}$, and $x_3^{(1)}$ of $1/y = 3$, as follows:

$$\widetilde{\mathbf{W}}_1^{(1)} \circ \mathbf{x}_1^{(1)} = \begin{bmatrix} w_{1,1} & w_{1,2} & w_{1,3} \\ w_{2,1} & w_{2,2} & w_{2,3} \end{bmatrix} \circ \begin{bmatrix} x_1 & x_2 & x_3 \end{bmatrix} = \begin{bmatrix} w_{1,1} \cdot x_1 & w_{1,2} \cdot x_2 & w_{1,3} \cdot x_3 \\ w_{2,1} \cdot x_1 & w_{2,2} \cdot x_2 & w_{2,3} \cdot x_3 \end{bmatrix}$$

$$\widetilde{\mathbf{W}}_2^{(1)} \circ \mathbf{x}_2^{(1)} = \begin{bmatrix} w_{1,4} & w_{1,5} & w_{1,6} \\ w_{2,4} & w_{2,5} & w_{2,6} \end{bmatrix} \circ \begin{bmatrix} x_4 & x_5 & x_6 \end{bmatrix} = \begin{bmatrix} w_{1,4} \cdot x_4 & w_{1,5} \cdot x_5 & w_{1,6} \cdot x_6 \\ w_{2,4} \cdot x_4 & w_{2,5} \cdot x_5 & w_{2,6} \cdot x_6 \end{bmatrix}$$

$$\widetilde{\mathbf{W}}_3^{(1)} \circ \mathbf{x}_3^{(1)} = \begin{bmatrix} w_{1,7} & w_{1,8} & w_{1,9} \\ w_{2,7} & w_{2,8} & w_{2,6} \end{bmatrix} \circ \begin{bmatrix} x_7 & x_8 & x_9 \end{bmatrix} = \begin{bmatrix} w_{1,7} \cdot x_7 & w_{1,8} \cdot x_8 & w_{1,9} \cdot x_9 \\ w_{2,7} \cdot x_7 & w_{2,8} \cdot x_8 & w_{2,9} \cdot x_9 \end{bmatrix}.$$

Note that for simplicity, the representation of the superscript (1) of the matrix components and the vector elements is omitted.

Here, permutation is performed whereby the second row of

$$\widetilde{\mathbf{W}}_2^{(1)} \circ \mathbf{x}_2^{(1)}$$

is cyclically shifted to the left by one column, as follows:

$$\overline{\widetilde{\mathbf{W}}_2^{(1)} \circ \mathbf{x}_2^{(1)}}$$

$$\overline{\widetilde{\mathbf{W}}_2^{(1)}{}^{\circ}\mathbf{x}_2^{(1)}} = \begin{bmatrix} w_{1,4} \cdot x_4 & w_{1,5} \cdot x_5 & w_{1,6} \cdot x_6 \\ w_{2,5} \cdot x_5 & w_{2,6} \cdot x_6 & w_{2,4} \cdot x_4 \end{bmatrix}.$$

Also, permutation is performed whereby the second row of

$$\widetilde{\mathbf{W}}_3^{(1)}{}^{\circ}\mathbf{x}_3^{(1)}$$

is cyclically shifted to the left by two columns, as follows:

$$\overline{\widetilde{\mathbf{W}}_3^{(1)}{}^{\circ}\mathbf{x}_3^{(1)}}$$

$$\overline{\widetilde{\mathbf{W}}_3^{(1)}{}^{\circ}\mathbf{x}_3^{(1)}} = \begin{bmatrix} w_{1,7} \cdot x_7 & w_{1,8} \cdot x_8 & w_{1,9} \cdot x_9 \\ w_{2,9} \cdot x_9 & w_{2,7} \cdot x_7 & w_{2,8} \cdot x_8 \end{bmatrix}.$$

Accordingly,

$$\dot{\mathbf{x}}^{(2)}$$

is computed as follows:

$$\dot{\mathbf{x}}^{(2)} = \widetilde{\mathbf{W}}_1^{(1)}{}^{\circ}\mathbf{x}_1^{(1)} + \overline{\widetilde{\mathbf{W}}_2^{(1)}{}^{\circ}\mathbf{x}_2^{(1)}} + \overline{\widetilde{\mathbf{W}}_3^{(1)}{}^{\circ}\mathbf{x}_3^{(1)}}$$

$$= \begin{bmatrix} w_{1,1} \cdot x_1 + w_{1,4} \cdot x_4 + w_{1,7} \cdot x_7 & w_{1,2} \cdot x_2 + w_{1,5} \cdot x_5 + w_{1,8} \cdot x_8 & w_{1,3} \cdot x_3 + w_{1,6} \cdot x_6 + w_{1,9} \cdot x_9 \\ w_{2,1} \cdot x_1 + w_{2,5} \cdot x_5 + w_{2,9} \cdot x_9 & w_{2,2} \cdot x_2 + w_{2,6} \cdot x_6 + w_{2,7} \cdot x_7 & w_{2,3} \cdot x_3 + w_{2,4} \cdot x_4 + w_{2,8} \cdot x_8 \end{bmatrix} \cdots (5).$$

For simplicity,

$$\dot{\mathbf{x}}^{(2)} = \dot{y} = \begin{bmatrix} y_1 & y_2 & y_3 \\ y_4 & y_5 & y_6 \end{bmatrix}.$$

With this procedure, it is possible to avoid the generation of the same equations from the beginning, even if the weight $w_{i,j}$ has taken values such as -1 and 1. For example, even if all of the weights $w_{i,j}$ in the above example were 1, the result is $y_1 = x_1 + x_4 + x_7$, $y_2 = x_2 + x_5 + x_8$, $y_3 = x_3 + x_6 + x_9$, $y_4 = x_1 + x_5 + x_9$, $y_5 = x_2 + x_6 + x_7$, $y_6 = x_3 + x_4, + x_8$ and no overlapping equations are generated. In addition, the number of taking the sums of the products per equation is reduced from the 9 times for the product and the 8 times for the sum as according to expression (3) and expression (4), to 3 times for the product and twice for the sum, as indicated by expression (5).
This technique simply involves cyclically shifting the second row of the components of

$$\widetilde{\mathbf{W}}_2^{(1)}{}^{\circ}\mathbf{x}_2^{(1)} = \begin{bmatrix} w_{1,4} \cdot x_4 & w_{1,5} \cdot x_5 & w_{1,6} \cdot x_6 \\ w_{2,4} \cdot x_4 & w_{2,5} \cdot x_5 & w_{2,6} \cdot x_6 \end{bmatrix}$$

to the left by one column, and cyclically shifting the second row of the components of

$$\widetilde{\mathbf{W}}_3^{(1)}{}^{\circ}\mathbf{x}_3^{(1)} = \begin{bmatrix} w_{1,7} \cdot x_7 & w_{1,8} \cdot x_8 & w_{1,9} \cdot x_9 \\ w_{2,7} \cdot x_7 & w_{2,8} \cdot x_8 & w_{2,9} \cdot x_9 \end{bmatrix}$$

to the left by 2 columns. Even with such simple structure, it is possible to avoid the generation of the same equations.

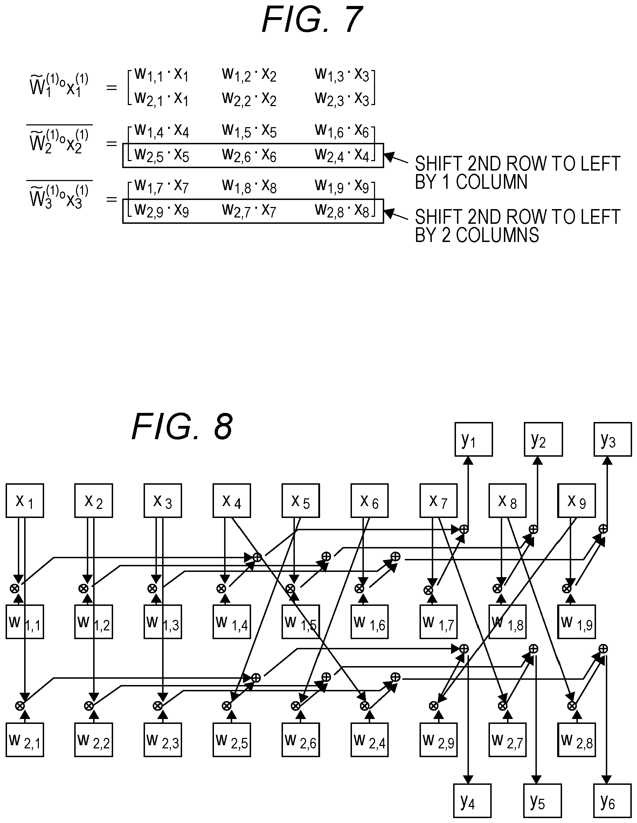

Fig. 7 and Fig. 8 illustrate a summary of the above computation example and a specific circuit for hardware implementation of the computation. A hardware configuration for performing the 1-column cyclical shifting and the 2-column cyclical shifting of the matrix illustrated in Fig. 7 is achieved by the hardware illustrated in Fig. 8.

Referring to Fig. 8, the sign combining "○" and "×" indicates a multiplication circuit, and the sign combining "○" and "+" indicates an addition circuit. As will be seen from Fig. 8, once the value $x^{(1)}$ and the weight $W^{(1)}$ of the input vector are set in a register or the like, the sum of products can be taken simultaneously. It is also possible by compression to reduce the number of product-sum circuits and the number of memories necessary for the circuit in proportion to the compression ratio of the matrix components.

Also, by fixing the permutation pattern from

$$\widetilde{\mathbf{W}}_i^{(l)} \circ \mathbf{x}_i^{(l)}$$

to

$$\overline{\widetilde{\mathbf{W}}_i^{(l)} \circ \mathbf{x}_i^{(l)}},$$

it becomes possible to fix the connection pattern as illustrated in Fig. 8, and to facilitate hardware implementation.

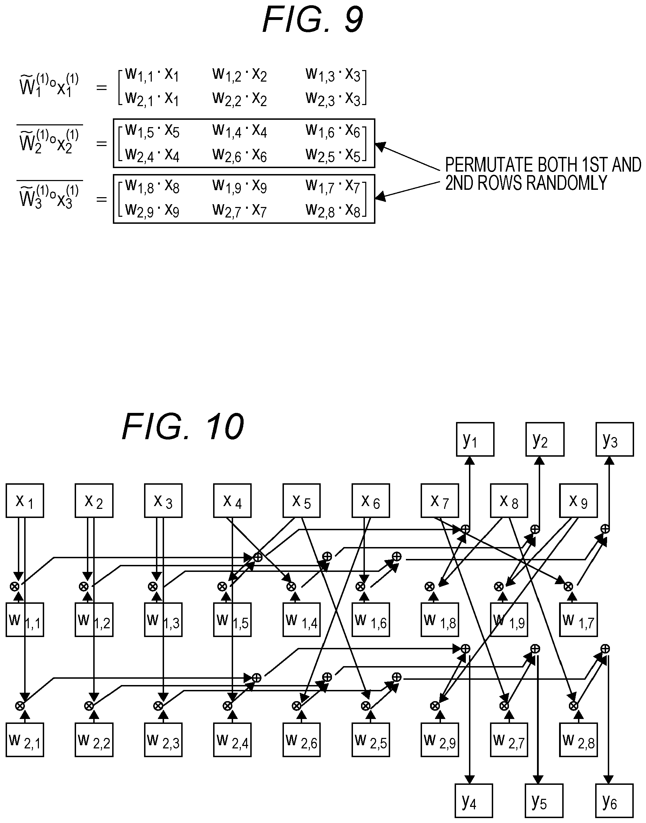

Fig. 9 and Fig. 10 illustrate a case where random permutation is employed for the permutation pattern from

$$\widetilde{\mathbf{W}}_i^{(l)} \circ \mathbf{x}_i^{(l)}$$

to

$$\overline{\widetilde{\mathbf{W}}_i^{(l)} \circ \mathbf{x}_i^{(l)}}.$$

A hardware configuration for random permutation for both the first row and the second row of the matrix illustrated in Fig. 9 is achieved by the hardware illustrated in Fig. 10. In this case, too, the permutation pattern can be fixed, so that hardware implementation is likewise facilitated.

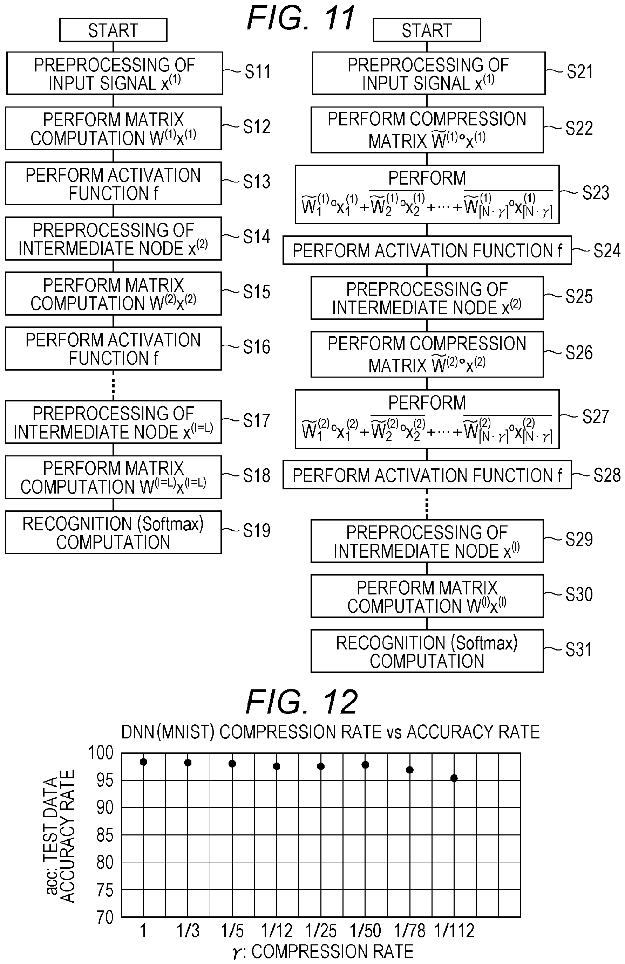

Fig. 11 compares a flowchart for performing the computation process of the present embodiment with that of a typical DNN. The steps S11 to S19 to the left in Fig. 11 relate to the flowchart for performing the typical DNN. The steps S21 to S31 to the right in Fig. 11 relate to the flowchart for performing the DNN of the present embodiment.

In the typical DNN, for input data such as image data, generally a combination of data of each pixel is handled as a vector, and the vector, as the input vector $x^{(1)}$, is subjected to preprocessing for normalization and quantization (step S11). Thereafter, as illustrated in Fig. 4, the matrix multiplication $W^{(1)}x^{(1)}$ is implemented using the weighting matrix $W^{(1)}$ of the initial layer l = 1 and the vector $x^{(1)}$ (step S12), and then the activation function f is performed (step S13) to obtain the vector $x^{(2)}$ of the node of the next layer l = 2. This process is repeated (step S14 to S16) to e.g. the 1 = L layer (step S17 to S18), and finally computation such as Softmax is implemented to perform recognition computation (step S19). While in the example of Fig. 11, a method has been described where a non-compressed matrix is used for the 1 = L layer, computation using the compressed matrix of the present invention for the 1 = L layer may be performed. Furthermore, the computation according to the inventive method may be applied to only some of all the layers.

Next, the process for performing the DNN according to the present embodiment illustrated on the right in Fig. 11 will be described.

First, as in the typical example, the input signal is subjected to preprocessing (step S21). Thereafter, as described as matrix computation, the compressed weighting matrix

$$\widetilde{\mathbf{W}}^{(1)}$$

is used to perform computation of

$$\widetilde{\mathbf{W}}^{(1)} \circ \mathbf{x}^{(1)}$$

(step S22), and further computation of

$$\widetilde{\mathbf{W}}_1^{(1)} \circ \mathbf{x}_1^{(1)} + \overline{\widetilde{\mathbf{W}}_2^{(1)} \circ \mathbf{x}_2^{(1)}} + \cdots + \overline{\widetilde{\mathbf{W}}_{[N \cdot \gamma]}^{(1)} \circ \mathbf{x}_{[N \cdot \gamma]}^{(1)}}$$

is performed (step S23).

Thereafter, the activation function f is performed (step S24). The process from the preprocessing to the performing of the activation function is repeated (step S25 to S28) with respect to the next intermediate node, such as to the 1 = L layer (step S29 to S30), and finally computation such as Softmax is implemented to perform recognition computation (step S31). Note that while in Fig. 11, a method has been described where a non-compressed matrix is used for the 1 = L layer, computation using a compressed matrix also for the 1 = L layer may be performed.

Further, the computation process of the present embodiment may be applied to only some of all the layers.

Thus, the present embodiment can be applied as is to the typical matrix computation portion.

As described above, compression of the weighting matrix causes hardly any change in characteristics, and therefore the amount of computation can be reduced. The weighting matrix is also a representation of the network structure per se, and compression of the weighting matrix can be considered a network compression.

Table 1 and Fig. 12 illustrate evaluation results obtained when the DNN has been subjected to network compression. A structure in which the input dimension is 784 and the intermediate layer has 500 dimensions and which finally produces an output of recognition computation (Softmax) of 0 to 9 is adopted. As will be seen from the evaluation results in Table 1 and Fig. 12, the accuracy rate has deteriorated only slightly when the amount of computation has been reduced to 1/50. Table 1 shows the accuracy rate for recognizing handwritten numerals of 0 to 9.

[Table 1]

| Compression ratio | No compression | $\gamma = 1/3$ | $\gamma = 1/6$ | $\gamma = 1/12$ | $\gamma = 1/25$ | $\gamma = 1/50$ |
|---|---|---|---|---|---|---|
| Accuracy rate (%) | 98.4 | 98.3 | 98.0 | 97.8 | 97.7 | 97.8 |

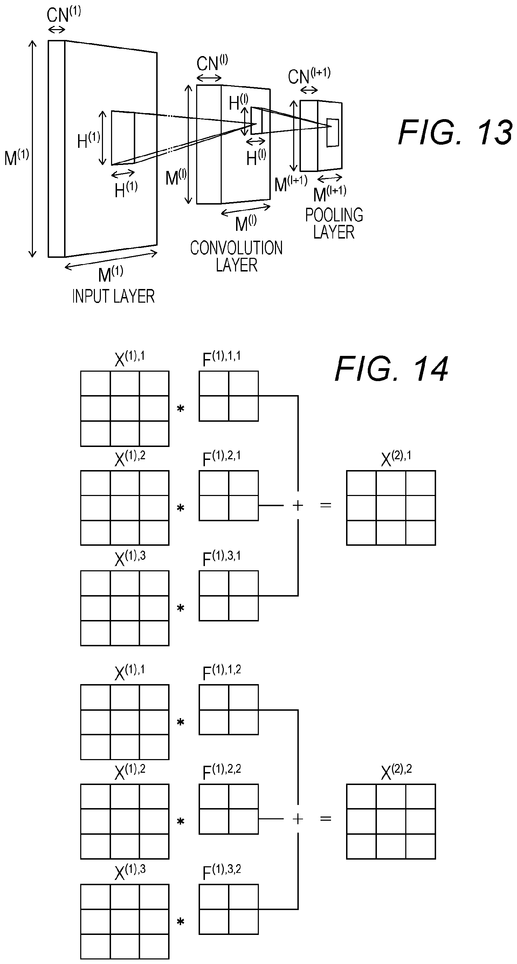

Next, a second embodiment of the present invention will be described with reference to Fig. 13 to Fig. 18. The second embodiment is an example applied to a convolutional neural network (CNN).

Fig. 13 illustrates a basic network configuration of the CNN. Generally, CNNs are used for the purpose of recognizing objects captured in an image and the like, for example. Accordingly, the following description contemplates identification of objects in an image.

First, let the input data size of the 1-th layer be $M^{(1)} \times M^{(1)}$, and the total number of input channels be $CN^{(1)}$. Also, the size of output data of the 1-th layer is the same as the input data size $M^{(1+1)} \times M^{(1+1)}$ of the I + 1 layer, and the total number of output channels of the 1-th layer is the same as the total number $CN^{(l+1)}$ of input channels of the I + 1 layer. Also, a region for convolution is referred to as a kernel or a filter. Let the size of the filter region be $H^{(1)} \times H^{(1)}$, and let the matrix of the filter corresponding to the respective channels C(l), C(I + 1) of the 1-layer, I + 1 layer be $F^{(l),\,C(l),\,C(l+1)}$. Let the input data corresponding to each C(l) be

$$\mathbf{X}^{(l),C(l)} = \begin{bmatrix} x_{1,1}^{(l),C(l)} & \cdots & x_{1,M^{(l)}}^{(l),C(l)} \\ \vdots & \ddots & \vdots \\ x_{M^{(l)},1}^{(l),C(l)} & \cdots & x_{M^{(l)},M^{(l)}}^{(l),C(l)} \end{bmatrix},$$

and let the filter corresponding to the input channel C(1), output channel C(I + 1) be

$$\mathbf{F}^{(l),C(l),C(l+1)} = \begin{bmatrix} f_{1,1}^{(l),C(l),C(l+1)} & \cdots & f_{1,H^{(l)}}^{(l),C(l),C(l+1)} \\ \vdots & \ddots & \vdots \\ f_{H^{(l)},1}^{(l),C(l),C(l+1)} & \cdots & f_{H^{(l)},H^{(l)}}^{(l),C(l),C(l+1)} \end{bmatrix}.$$

Fig. 14 illustrates an example. In a case of RGB image data, for example, a channel is required for each of R, G, and B, and the total number of the channels of the 1 = 1st layer of the input is the $CN^{(l=1)} = 3$. Also, when $M^{(1)} = 3$, $M^{(2)} = 3$, $CN^{(2)} = 2$, and $H^{(1)} = 2$,

$$\mathbf{X}^{(1),1} = \begin{bmatrix} x_{1,1}^{(1),1} & x_{1,2}^{(1),1} & x_{1,3}^{(1),1} \\ x_{2,1}^{(1),1} & x_{2,2}^{(1),1} & x_{2,3}^{(1),1} \\ x_{3,1}^{(1),1} & x_{3,2}^{(1),1} & x_{3,3}^{(1),1} \end{bmatrix}, \mathbf{X}^{(1),2} = \begin{bmatrix} x_{1,1}^{(1),2} & x_{1,2}^{(1),2} & x_{1,3}^{(1),2} \\ x_{2,1}^{(1),2} & x_{2,2}^{(1),2} & x_{2,3}^{(1),2} \\ x_{3,1}^{(1),2} & x_{3,2}^{(1),2} & x_{3,3}^{(1),2} \end{bmatrix}, \mathbf{X}^{(1),3} = \begin{bmatrix} x_{1,1}^{(1),3} & x_{1,2}^{(1),3} & x_{1,3}^{(1),3} \\ x_{2,1}^{(1),3} & x_{2,2}^{(1),3} & x_{2,3}^{(1),3} \\ x_{3,1}^{(1),3} & x_{3,2}^{(1),3} & x_{3,3}^{(1),3} \end{bmatrix},$$

$$\mathbf{F}^{(1),1,1} = \begin{bmatrix} f_{1,1}^{(1),1,1} & f_{1,2}^{(1),1,1} \\ f_{2,1}^{(1),1,1} & f_{2,2}^{(1),1,1} \end{bmatrix}, \mathbf{F}^{(1),2,1} = \begin{bmatrix} f_{1,1}^{(1),2,1} & f_{1,2}^{(1),2,1} \\ f_{2,1}^{(1),2,1} & f_{2,2}^{(1),2,1} \end{bmatrix}, \mathbf{F}^{(1),3,1} = \begin{bmatrix} f_{1,1}^{(1),3,1} & f_{1,2}^{(1),3,1} \\ f_{2,1}^{(1),3,1} & f_{2,2}^{(1),3,1} \end{bmatrix},$$

$$\mathbf{F}^{(1),1,2} = \begin{bmatrix} f_{1,1}^{(1),1,2} & f_{1,2}^{(1),1,2} \\ f_{2,1}^{(1),1,2} & f_{2,2}^{(1),1,2} \end{bmatrix}, \mathbf{F}^{(1),2,2} = \begin{bmatrix} f_{1,1}^{(1),2,2} & f_{1,2}^{(1),2,2} \\ f_{2,1}^{(1),2,2} & f_{2,2}^{(1),2,2} \end{bmatrix}, \mathbf{F}^{(1),3,2} = \begin{bmatrix} f_{1,1}^{(1),3,2} & f_{1,2}^{(1),3,2} \\ f_{2,1}^{(1),3,2} & f_{2,2}^{(1),3,2} \end{bmatrix},$$

$$\mathbf{X}^{(2),1} = \begin{bmatrix} x_{1,1}^{(2),1} & x_{1,2}^{(2),1} & x_{1,3}^{(2),1} \\ x_{2,1}^{(2),1} & x_{2,2}^{(2),1} & x_{2,3}^{(2),1} \\ x_{3,1}^{(2),1} & x_{3,2}^{(2),1} & x_{3,3}^{(2),1} \end{bmatrix}, \mathbf{X}^{(2),2} = \begin{bmatrix} x_{1,1}^{(2),2} & x_{1,2}^{(2),2} & x_{1,3}^{(2),2} \\ x_{2,1}^{(2),2} & x_{2,2}^{(2),2} & x_{2,3}^{(2),2} \\ x_{3,1}^{(2),2} & x_{3,2}^{(2),2} & x_{3,3}^{(2),2} \end{bmatrix}.$$

When computation is performed along Fig. 14,

$$\mathbf{X}^{(2),1} = \begin{bmatrix} x_{1,1}^{(2),1} & x_{1,2}^{(2),1} & x_{1,3}^{(2),1} \\ x_{2,1}^{(2),1} & x_{2,2}^{(2),1} & x_{2,3}^{(2),1} \\ x_{3,1}^{(2),1} & x_{3,2}^{(2),1} & x_{3,3}^{(2),1} \end{bmatrix}$$

$$= \begin{bmatrix} \sum_{k=1}^{CN^{(1)}} \sum_{i=1}^{H^{(1)}} \sum_{j=1}^{H^{(1)}} f_{i,j}^{(1),k,1} \cdot x_{i,j}^{(1),k} & \sum_{k=1}^{CN^{(1)}} \sum_{i=1}^{H^{(1)}} \sum_{j=1}^{H^{(1)}} f_{i,j+1}^{(1),k,1} \cdot x_{i,j+1}^{(1),k} & \sum_{k=1}^{CN^{(1)}} \sum_{i=1}^{H^{(1)}} \sum_{j=1}^{H^{(1)}} f_{i,j+2}^{(1),k,1} \cdot x_{i,j+2}^{(1),k} \\ \sum_{k=1}^{CN^{(1)}} \sum_{i=1}^{H^{(1)}} \sum_{j=1}^{H^{(1)}} f_{i+1,j}^{(1),k,1} \cdot x_{i+1,j}^{(1),k} & \sum_{k=1}^{CN^{(1)}} \sum_{i=1}^{H^{(1)}} \sum_{j=1}^{H^{(1)}} f_{i+1,j+1}^{(1),k,1} \cdot x_{i+1,j+1}^{(1),k} & \sum_{k=1}^{CN^{(1)}} \sum_{i=1}^{H^{(1)}} \sum_{j=1}^{H^{(1)}} f_{i+1,j+2}^{(1),k,1} \cdot x_{i+1,j+2}^{(1),k} \\ \sum_{k=1}^{CN^{(1)}} \sum_{i=1}^{H^{(1)}} \sum_{j=1}^{H^{(1)}} f_{i+2,j}^{(1),k,1} \cdot x_{i+2,j}^{(1),k} & \sum_{k=1}^{CN^{(1)}} \sum_{i=1}^{H^{(1)}} \sum_{j=1}^{H^{(1)}} f_{i+2,j+1}^{(1),k,1} \cdot x_{i+2,j+1}^{(1),k} & \sum_{k=1}^{CN^{(1)}} \sum_{i=1}^{H^{(1)}} \sum_{j=1}^{H^{(1)}} f_{i+2,j+2}^{(1),k,1} \cdot x_{i+2,j+2}^{(1),k} \end{bmatrix},$$

$$\mathbf{X}^{(2),2} = \begin{bmatrix} x_{1,1}^{(2),2} & x_{1,2}^{(2),2} & x_{1,3}^{(2),2} \\ x_{2,1}^{(2),2} & x_{2,2}^{(2),2} & x_{2,3}^{(2),2} \\ x_{3,1}^{(2),2} & x_{3,2}^{(2),2} & x_{3,3}^{(2),2} \end{bmatrix}$$

$$= \begin{bmatrix} \sum_{k=1}^{CN^{(1)}} \sum_{i=1}^{H^{(1)}} \sum_{j=1}^{H^{(1)}} f_{i,j}^{(1),k,2} \cdot x_{i,j}^{(1),k} & \sum_{k=1}^{CN^{(1)}} \sum_{i=1}^{H^{(1)}} \sum_{j=1}^{H^{(1)}} f_{i,j+1}^{(1),k,2} \cdot x_{i,j+1}^{(1),k} & \sum_{k=1}^{CN^{(1)}} \sum_{i=1}^{H^{(1)}} \sum_{j=1}^{H^{(1)}} f_{i,j+2}^{(1),k,2} \cdot x_{i,j+2}^{(1),k} \\ \sum_{k=1}^{CN^{(1)}} \sum_{i=1}^{H^{(1)}} \sum_{j=1}^{H^{(1)}} f_{i+1,j}^{(1),k,2} \cdot x_{i+1,j}^{(1),k} & \sum_{k=1}^{CN^{(1)}} \sum_{i=1}^{H^{(1)}} \sum_{j=1}^{H^{(1)}} f_{i+1,j+1}^{(1),k,2} \cdot x_{i+1,j+1}^{(1),k} & \sum_{k=1}^{CN^{(1)}} \sum_{i=1}^{H^{(1)}} \sum_{j=1}^{H^{(1)}} f_{i+1,j+2}^{(1),k,2} \cdot x_{i+1,j+2}^{(1),k} \\ \sum_{k=1}^{CN^{(1)}} \sum_{i=1}^{H^{(1)}} \sum_{j=1}^{H^{(1)}} f_{i+2,j}^{(1),k,2} \cdot x_{i+2,j}^{(1),k} & \sum_{k=1}^{CN^{(1)}} \sum_{i=1}^{H^{(1)}} \sum_{j=1}^{H^{(1)}} f_{i+2,j+1}^{(1),k,2} \cdot x_{i+2,j+1}^{(1),k} & \sum_{k=1}^{CN^{(1)}} \sum_{i=1}^{H^{(1)}} \sum_{j=1}^{H^{(1)}} f_{i+2,j+2}^{(1),k,2} \cdot x_{i+2,j+2}^{(1),k} \end{bmatrix} .$$

where, in

$$x_{i,j}^{(l),C(l)},$$

when i > M$^{(1)}$ or j > M$^{(1)}$,

$$x_{i,j}^{(l),C(l)} = 0 .$$

As indicated above, performing computation of convolution in matrix form makes implementation complicated. Thus, for sake of computational efficiency, the matrix X$^{(l), C(l)}$ is transformed into a vector with a length M$^{(1)} \times$ M$^{(1)}$ to obtain x$^{(l), C(l)}$ as follows:

$$\mathbf{x}^{(l),C(l)} = \begin{bmatrix} x_{1,1}^{(l),C(l)} & \cdots & x_{1,M^{(l)}}^{(l),C(l)} & x_{2,1}^{(l),C(l)} & \cdots & x_{1,M^{(l)}}^{(l),C(l)} & \cdots & x_{M^{(l)},1}^{(l),C(l)} & \cdots & x_{M^{(l)},M^{(l)}}^{(l),C(l)} \end{bmatrix}.$$

Meanwhile, X$^{(l), C(l)}$ is transformed, in accordance with the size of output data, into a vector with a length M$^{(l+1)}$ $\times$ M$^{(l+1)}$ for computation of convolution, obtaining x$_r$$^{(l), C(l)}$, where r means a vector for the r-th computation of convolution. For example, the vector x$_{r=1}$$^{(l), C(l)}$ generated initially for the r = 1-th computation of convolution is

$$\mathbf{x}_{r=1}^{(l),C(l)} = \begin{bmatrix} x_{1,1}^{(l),C(l)} & \cdots & x_{1,M^{(l+1)}}^{(l),C(l)} & x_{2,1}^{(l),C(l)} & \cdots & x_{1,M^{(l+1)}}^{(l),C(l)} & \cdots & x_{M^{(l+1)},1}^{(l),C(l)} & \cdots & x_{M^{(l+1)},M^{(l+1)}}^{(l),C(l)} \end{bmatrix}.$$

Thereafter, the vector x$_{r=2}$$^{(l), C(l)}$ generated for the r = 2-th computation of convolution is

$$\mathbf{x}_{r=2}^{(l),C(l)} = \begin{bmatrix} x_{1,2}^{(l),C(l)} & \cdots & x_{1,1+M^{(l+1)}}^{(l),C(l)} & x_{2,1}^{(l),C(l)} & \cdots & x_{1,1+M^{(l+1)}}^{(l),C(l)} & \cdots & x_{M^{(l+1)},1}^{(l),C(l)} & \cdots & x_{M^{(l+1)},1+M^{(l+1)}}^{(l),C(l)} \end{bmatrix}.$$

Through a similar procedure, the convolution-computation regions of the matrix X$^{(l), C(l)}$ are transformed into vectors successively so as to correspond to the computing order of the computation of convolution, and the vectors are linked in the row-direction to generate the matrix xb$^{(l), C(l)}$ of the size (H$^{(l)} \times$ H$^{(l)}$) $\times$ (M$^{(l+1)} \times$ M$^{(l+1)}$) for each channel C(1), as follows:

$\mathbf{xb}^{(l),C(l)}$

$$= \begin{bmatrix} x_{1,1}^{(l),C(l)} & \cdots & x_{1,M^{(l+1)}}^{(l),C(l)} & x_{2,1}^{(l),C(l)} & \cdots & x_{2,M^{(l+1)}}^{(l),C(l)} & \cdots & x_{M^{(l+1)},1}^{(l),C(l)} & \cdots & x_{M^{(l+1)},M^{(l+1)}}^{(l),C(l)} \\ \vdots & \ddots & \vdots & \vdots & \ddots & \vdots & \ddots & \vdots & \ddots & \vdots \\ x_{1,H^{(l)}}^{(l),C(l)} & \cdots & x_{1,H^{(l)}+M^{(l+1)}}^{(l),C(l)} & x_{2,H^{(l)}}^{(l),C(l)} & \cdots & x_{2,H^{(l)}+M^{(l+1)}}^{(l),C(l)} & \cdots & x_{M^{(l+1)},H^{(l)}}^{(l),C(l)} & \cdots & x_{M^{(l+1)},H^{(l)}+M^{(l+1)}}^{(l),C(l)} \\ x_{2,1}^{(l),C(l)} & \cdots & x_{2,M^{(l+1)}}^{(l),C(l)} & x_{3,1}^{(l),C(l)} & \cdots & x_{3,M^{(l+1)}}^{(l),C(l)} & \cdots & x_{M^{(l+1)}+1,1}^{(l),C(l)} & \cdots & x_{M^{(l+1)}+1,M^{(l+1)}}^{(l),C(l)} \\ \vdots & \ddots & \vdots & \vdots & \ddots & \vdots & \ddots & \vdots & \ddots & \vdots \\ x_{2,H^{(l)}}^{(l),C(l)} & \cdots & x_{2,H^{(l)}+M^{(l+1)}}^{(l),C(l)} & x_{3,H^{(l)}}^{(l),C(l)} & \cdots & x_{3,H^{(l)}+M^{(l+1)}}^{(l),C(l)} & \cdots & x_{M^{(l+1)}+1,H^{(l)}}^{(l),C(l)} & \cdots & x_{M^{(l+1)}+1,H^{(l)}+M^{(l+1)}}^{(l),C(l)} \\ \vdots & \ddots & \vdots & \vdots & \ddots & \vdots & \ddots & \vdots & \ddots & \vdots \\ x_{H^{(l)},1}^{(l),C(l)} & \cdots & x_{H^{(l)},M^{(l+1)}}^{(l),C(l)} & x_{H^{(l)}+1,1}^{(l),C(l)} & \cdots & x_{H^{(l)}+1,M^{(l+1)}}^{(l),C(l)} & \cdots & x_{H^{(l)}+M^{(l+1)},1}^{(l),C(l)} & \cdots & x_{H^{(l)}+M^{(l+1)},M^{(l+1)}}^{(l),C(l)} \\ \vdots & \ddots & \vdots & \vdots & \ddots & \vdots & \ddots & \vdots & \ddots & \vdots \\ x_{H^{(l)},H^{(l)}}^{(l),C(l)} & \cdots & x_{H^{(l)},H^{(l)}+M^{(l+1)}}^{(l),C(l)} & x_{H^{(l)}+1,H^{(l)}}^{(l),C(l)} & \cdots & x_{H^{(l)}+1,H^{(l)}+M^{(l+1)}}^{(l),C(l)} & \cdots & x_{H^{(l)}+M^{(l+1)},H^{(l)}}^{(l),C(l)} & \cdots & x_{H^{(l)}+M^{(l+1)},H^{(l)}+M^{(l+1)}}^{(l),C(l)} \end{bmatrix}$$

The matrices are linked in the row-direction for the number of channels CN$^{(l)}$ to generate xb$^{(l)}$, as follows:

$$\mathbf{xb}^{(l)} = \begin{bmatrix} \mathbf{xb}^{(l),1} \\ \mathbf{xb}^{(l),2} \\ \vdots \\ \mathbf{xb}^{(l),CN^{(l)}} \end{bmatrix},$$

where, in

$$x_{i,j}^{(l),C(l)},$$

when i > M$^{(1)}$ or j > M$^{(1)}$,

$$x_{i,j}^{(l),C(l)} = 0 .$$

Next, xb$^{(l)}$ is used and, so as to enable computation by multiplication of its vectors, F$^{(l),\ C(l),\ C(l+1)}$ is transformed into a vector f$^{(l),\ C(l),\ C(l+1)}$ of a length H$^{(l)}$ × H$^{(l)}$, and a filter matrix FB$^{(l)}$ of a size CN$^{(l+1)}$ × (H$^{(l)}$ × H$^{(l)}$ × CN$^{(l)}$) is generated so that the vector f$^{(l),\ C(l),\ C(l+1)}$ corresponds to the number of channels of CN$^{(1)}$ and CN$^{(l+1)}$ in order.

$\mathbf{f}^{(l),C(l),C(l+1)}$

$$= \begin{bmatrix} x_{1,1}^{(l),C(l),C(l+1)} & \cdots & x_{1,H^{(l)}}^{(l),C(l),C(l+1)} & x_{2,1}^{(l),C(l),C(l+1)} & \cdots & x_{2,H^{(l)}}^{(l),C(l),C(l+1)} & \cdots & x_{H^{(l)},1}^{(l),C(l),C(l+1)} & \cdots & x_{H^{(l)},H^{(l)}}^{(l),C(l),C(l+1)} \end{bmatrix},$$

$$\mathbf{FB}^{(l)} = \begin{bmatrix} \mathbf{f}^{(l),1,1} & \cdots & \mathbf{f}^{(l),CN^{(l)},1} \\ \vdots & \ddots & \vdots \\ \mathbf{f}^{(l),1,CN^{(l+1)}} & \cdots & \mathbf{f}^{(l),CN^{(l)},CN^{(l+1)}} \end{bmatrix}.$$

From the product of the filter matrix FB$^{(l)}$ and x$^{(1)}$, xb$^{(l+1)}$ is computed as follows:

$$\mathbf{xb}^{(l+1)} = \mathbf{FB}^{(l)} \cdot \mathbf{xb}^{(l)}$$

Also, each row of xb$^{(l+1)}$ may be regarded as x$^{(l+1), C(l+1)}$ as follows:

$$\mathbf{xb}^{(l+1)} = \begin{bmatrix} \mathbf{x}^{(l+1),1} \\ \vdots \\ \mathbf{x}^{(l+1),C(l+1)} \\ \vdots \\ \mathbf{x}^{(l+1),CN(l+1)} \end{bmatrix}.$$

Generally, in a convolutional layer of a CNN, computation is performed as described above. In the example of Fig. 14:

$$\mathbf{xb}^{(1)} = \begin{bmatrix} x_{1,1}^{(1),1} & x_{1,2}^{(1),1} & x_{1,3}^{(1),1} & x_{2,1}^{(1),1} & x_{2,2}^{(1),1} & x_{2,3}^{(1),1} & x_{3,1}^{(1),1} & x_{3,2}^{(1),1} & x_{3,3}^{(1),1} \\ x_{1,2}^{(1),1} & x_{1,3}^{(1),1} & 0 & x_{2,2}^{(1),1} & x_{2,3}^{(1),1} & 0 & x_{3,2}^{(1),1} & x_{3,3}^{(1),1} & 0 \\ x_{2,1}^{(1),1} & x_{2,2}^{(1),1} & x_{2,3}^{(1),1} & x_{3,1}^{(1),1} & x_{3,2}^{(1),1} & x_{3,3}^{(1),1} & 0 & 0 & 0 \\ x_{2,2}^{(1),1} & x_{2,3}^{(1),1} & 0 & x_{3,2}^{(1),1} & x_{3,3}^{(1),1} & 0 & 0 & 0 & 0 \\ x_{1,1}^{(1),2} & x_{1,2}^{(1),2} & x_{1,3}^{(1),2} & x_{2,1}^{(1),2} & x_{2,2}^{(1),2} & x_{2,3}^{(1),2} & x_{3,1}^{(1),2} & x_{3,2}^{(1),2} & x_{3,3}^{(1),2} \\ x_{1,2}^{(1),2} & x_{1,3}^{(1),2} & 0 & x_{2,2}^{(1),2} & x_{2,3}^{(1),2} & 0 & x_{3,2}^{(1),2} & x_{3,3}^{(1),2} & 0 \\ x_{2,1}^{(1),2} & x_{2,2}^{(1),2} & x_{2,3}^{(1),2} & x_{3,1}^{(1),2} & x_{3,2}^{(1),2} & x_{3,3}^{(1),2} & 0 & 0 & 0 \\ x_{2,2}^{(1),2} & x_{2,3}^{(1),2} & 0 & x_{3,2}^{(1),2} & x_{3,3}^{(1),2} & 0 & 0 & 0 & 0 \\ x_{1,1}^{(1),3} & x_{1,2}^{(1),3} & x_{1,3}^{(1),3} & x_{2,1}^{(1),3} & x_{2,2}^{(1),3} & x_{2,3}^{(1),3} & x_{3,1}^{(1),3} & x_{3,2}^{(1),3} & x_{3,3}^{(1),3} \\ x_{1,2}^{(1),3} & x_{1,3}^{(1),3} & 0 & x_{2,2}^{(1),3} & x_{2,3}^{(1),3} & 0 & x_{3,2}^{(1),3} & x_{3,3}^{(1),3} & 0 \\ x_{2,1}^{(1),3} & x_{2,2}^{(1),3} & x_{2,3}^{(1),3} & x_{3,1}^{(1),3} & x_{3,2}^{(1),3} & x_{3,3}^{(1),3} & 0 & 0 & 0 \\ x_{2,2}^{(1),3} & x_{2,3}^{(1),3} & 0 & x_{3,2}^{(1),3} & x_{3,3}^{(1),3} & 0 & 0 & 0 & 0 \end{bmatrix}$$

$$\mathbf{FB}^{(1)} = \begin{bmatrix} f_{1,1}^{(1),1,1} & f_{1,2}^{(1),1,1} & f_{2,1}^{(1),1,1} & f_{2,2}^{(1),1,1} & f_{1,1}^{(1),2,1} & f_{1,2}^{(1),2,1} & f_{2,1}^{(1),2,1} & f_{2,2}^{(1),2,1} & f_{1,1}^{(1),3,1} & f_{1,2}^{(1),3,1} & f_{2,1}^{(1),3,1} & f_{2,2}^{(1),3,1} \\ f_{1,1}^{(1),1,2} & f_{1,2}^{(1),1,2} & f_{2,1}^{(1),1,2} & f_{2,2}^{(1),1,2} & f_{1,1}^{(1),2,2} & f_{1,2}^{(1),2,2} & f_{2,1}^{(1),2,2} & f_{2,2}^{(1),2,2} & f_{1,1}^{(1),3,2} & f_{1,2}^{(1),3,2} & f_{2,1}^{(1),3,2} & f_{2,2}^{(1),3,2} \end{bmatrix}$$

From this,

$$\mathbf{xb}^{(2)} = \mathbf{FB}^{(1)} \cdot \mathbf{xb}^{(1)}.$$

is computed.

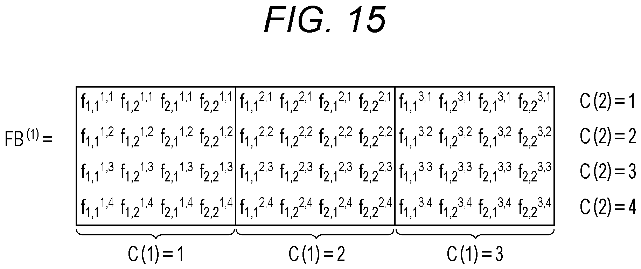

Next, network compression will be described. Fig. 15 illustrates FB$^{(1)}$ in a case where, for example, H(1) = 2, CN(1) = 3, and CN(2) = 4.

It is noted that of the superscript suffix of the elements of the matrix of Fig. 15, (1) indicating the layer is omitted for simplification.

The network compression method of the present embodiment with respect to the CNN is applied to the FB$^{(l)}$ for compression. The compressed filter matrix is

$$\widetilde{\mathbf{FB}}^{(l)}.$$

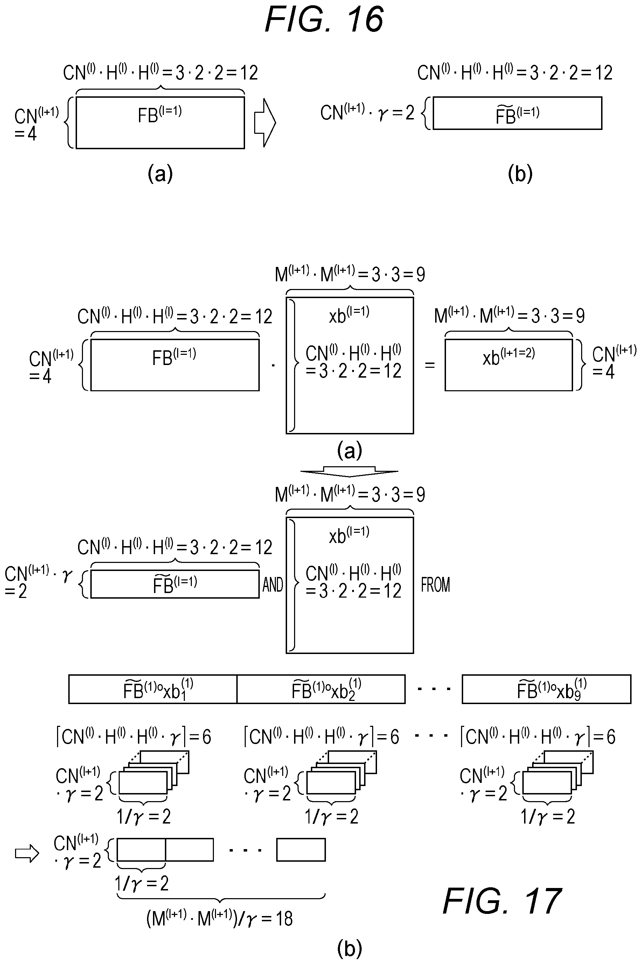

For example, fig. 16 illustrates an example where the compression ratio y = 1/2. As in the case of the CNN, the number of times of multiplication can be reduced to = 1/2. In the typical CNN, in order to subject the convolutional layer, which is a part thereof, to the computation as described in Fig. 14, computation indicated as a typical example of Fig. 17(a) has been necessary.

That is, it has been necessary to take the product for $CN^{(l+1)} \cdot CN^{(l)} \cdot H^{(l)} \cdot H^{(l)} \cdot M^{(l+1)} \cdot M^{(l+1)}$ times, the number of times of taking the product causing an increase in the amount of computation. In the present embodiment, as illustrated in Fig. 16(b), the original $CN^{(l+1)} \times (CN^{(l)} \cdot H^{(l)} \cdot H^{(l)})$ matrix is compressed to $(CN^{(l+1)} \cdot \gamma) \times (CN^{(l)} \cdot H^{(l)} \cdot H^{(l)})$ to the compression ratio indicated by $\gamma$.

In the illustrated example, the compression ratio is $\gamma = 1/2$ by way of example due to space limitations. However, as in the case of the DNN, it is also possible to set a higher compression ratio compression ratio, such as a few tenths.

This matrix

$$\widehat{\widetilde{\mathbf{FB}}}^{(l)}$$

is used to perform the following computation. First,

$$\widehat{\widetilde{\mathbf{FB}}}^{(l)}$$

is defined as follows:

$$\widehat{\widetilde{\mathbf{FB}}}^{(l)} = \begin{bmatrix} \mathbf{f}^{(l),1,1} & \cdots & \mathbf{f}^{(l),CN^{(l)},1} \\ \vdots & \ddots & \vdots \\ \mathbf{f}^{(l),1,\gamma \cdot CN^{(l+1)}} & \cdots & \mathbf{f}^{(l),CN^{(l)},\gamma \cdot CN^{(l+1)}} \end{bmatrix} \quad \cdots \cdot (6)$$

Moreover, when the i-th column partial matrix of $xb^{(l)}$ is $xb_i^{(l)}$, the following computation is performed with respect to i = 1, 2, ..., $M^{(l+1)} \cdot M^{(l+1)}$.

$$\widehat{\widetilde{\mathbf{Fx}}}_i^{(l)} = \widehat{\widetilde{\mathbf{FB}}}^{(l)} \circ \mathbf{xb}_i^{(l)} \quad \cdots \cdot (7)$$

In the example of Fig. 17(b), since $M^{(l+1)} \cdot M^{(l+1)} = 9$, the computation is performed 9 times.

Next, as illustrated in Fig. 17(b), the $(CN^{(l+1)} \cdot \gamma) \times (CN^{(l)} \cdot H^{(l)} \cdot H^{(l)})$ matrix

$$\widehat{\widetilde{\mathbf{Fx}}}_i^{(l)} = \begin{bmatrix} a_{i,1,1}^{(l)} & \cdots & a_{i,1,CN^{(l)} \cdot H^{(l)} \cdot H^{(l)}}^{(l)} \\ \vdots & \ddots & \vdots \\ a_{i,CN^{(l+1)} \cdot \gamma,1}^{(l)} & \cdots & a_{i,CN^{(l+1)} \cdot \gamma,CN^{(l)} \cdot H^{(l)} \cdot H^{(l)}}^{(l)} \end{bmatrix}$$

is divided into a $(CN^{(l+1)} \cdot \gamma) \times 1/\gamma$ matrix

$$\widehat{\widetilde{\mathbf{Fx}}}_i^{(l),j}$$

at every $1/\gamma = 2$ columns, as follows:

$$\widetilde{\mathbf{Fx}}_i^{(l),1} = \begin{bmatrix} a_{i,1,1}^{(l)} & a_{i,1,2}^{(l)} \\ a_{i,2,1}^{(l)} & a_{i,2,2}^{(l)} \end{bmatrix}$$

$$, \widetilde{\mathbf{Fx}}_i^{(l),2} = \begin{bmatrix} a_{i,1,3}^{(l)} & a_{i,1,4}^{(l)} \\ a_{i,2,3}^{(l)} & a_{i,2,4}^{(l)} \end{bmatrix}$$

$$, \cdots$$

$$, \widetilde{\mathbf{Fx}}_i^{(l),j} = \begin{bmatrix} a_{i,1,2(j-1)+1}^{(l)} & a_{i,1,2(j-1)+2}^{(l)} \\ a_{i,2,2(j-1)+1}^{(l)} & a_{i,2,2(j-1)+1}^{(l)} \end{bmatrix}$$

$$, \cdots$$

$$, \widetilde{\mathbf{Fx}}_i^{(l),\lceil CN^{(l)} \cdot H^{(l)} \cdot H^{(l)} \cdot \gamma \rceil} = \begin{bmatrix} a_{i,1,2(\lceil CN^{(l)} \cdot H^{(l)} \cdot H^{(l)} \cdot \gamma \rceil -1)+1}^{(l)} & a_{i,1,2(\lceil CN^{(l)} \cdot H^{(l)} \cdot H^{(l)} \cdot \gamma \rceil -1)+2}^{(l)} \\ a_{i,2,2(\lceil CN^{(l)} \cdot H^{(l)} \cdot H^{(l)} \cdot \gamma \rceil -1)+1}^{(l)} & a_{i,2,2(\lceil CN^{(l)} \cdot H^{(l)} \cdot H^{(l)} \cdot \gamma \rceil -1)+1}^{(l)} \end{bmatrix}$$

In addition,

$$\widetilde{\mathbf{Fx}}_i^{(l),1}$$

is subjected to permutation of components according to a different rule to obtain a matrix

$$\overline{\widetilde{\mathbf{Fx}}_i^{(l),j}},$$

and the matrices are summed as follows:

$$\dot{\mathbf{xb}}_i^{(l+1)} = \overline{\widetilde{\mathbf{Fx}}_i^{(l),1}} + \overline{\widetilde{\mathbf{Fx}}_i^{(l),2}} + \cdots + \overline{\widetilde{\mathbf{Fx}}_i^{(l),\lceil CN^{(l)} \cdot H^{(l)} \cdot H^{(l)} \cdot \gamma \rceil}} \quad \cdots (8)$$

As a result, of

$$\left(CN^{(l+1)} \cdot \gamma\right) \times \frac{1}{\gamma} = 2 \times 2$$

indicated at the bottom of Fig. 17, $M^{(l)} \cdot M^{(l)} = 9$ of the matrix

$$\dot{\mathbf{xb}}_i^{(l+1)}$$

are output so as to correspond to i = 1, 2, ..., $M^{(l+1)} \cdot M^{(l+1)}$. The matrix

$$\dot{\mathbf{xb}}_i^{(l+1)} = \begin{bmatrix} b_{i,1,1}^{(l+1)} & \cdots & b_{i,1,1/\gamma}^{(l+1)} \\ \vdots & \ddots & \vdots \\ b_{i,CN^{(l+1)}\cdot\gamma,1}^{(l+1)} & \cdots & b_{i,CN^{(l+1)}\cdot\gamma,1/\gamma}^{(l+1)} \end{bmatrix}$$

is transformed into a vector, in which each row is linked in the column direction as shown below, and transposed to construct

$$\mathbf{xb}_i^{(l+1)} = \begin{bmatrix} b_{i,1,1}^{(l+1)} & \cdots & b_{i,1,1/\gamma}^{(l+1)} & b_{i,2,1}^{(l+1)} & \cdots & b_{i,2,1/\gamma}^{(l+1)} & \cdots & b_{i,CN^{(l+1)}\cdot\gamma,1}^{(l+1)} & \cdots & b_{i,CN^{(l+1)}\cdot\gamma,1/\gamma}^{(l+1)} \end{bmatrix}^T .$$

These are used to determine $xb^{(l+1)}$ of $CN^{(l+1)} \times (M^{(l+1)}\cdot M^{(l+1)})$.

$$\mathbf{xb}^{(l+1)} = \begin{bmatrix} \mathbf{xb}_1^{(l+1)} & \mathbf{xb}_2^{(l+1)} & \cdots & \mathbf{xb}_{M^{(l+1)}\cdot M^{(l+1)}}^{(l+1)} \end{bmatrix}$$

In the above example, of

$$\left( CN^{(2)} \cdot \gamma \right) \times \frac{1}{\gamma} = 2 \times 2 \quad ,$$

from the matrix

$$\dot{\mathbf{xb}}_i^{(2)} ,$$

$$\mathbf{xb}_i^{(2)}$$

of

$$CN^{(2)} \times 1 = 4 \times 1$$

is generated.

Finally, the output matrix $xb^{(l+1=2)}$ of $CN^{(1)} \times (M^{(l+1)}\cdot M^{(l+1)}) = 4 \times 9$ is obtained, and it is possible to perform computation of the output matrix $xb^{(l+1=2)}$ of the same number of nodes as before. Particularly, by using the sum of matrices based on a combination of the permutated matrix

$$\overline{\widetilde{\mathbf{Fx}}_i^{(l),j}} ,$$

it is possible to achieve characteristics close to a random matrix.

In terms of result recognition performance and prediction performance, there is only a slight performance difference between the typical example and the present embodiment. On the other hand, in the case of the present embodiment, it is possible to obtain the effect that the number of times of multiplication involving a large amount of computation can be lowered to the compression ratio $\gamma$, as in the case of the DNN. These may be implemented using software, or hardware such as an FPGA.

Next, an implementation example will be described. For example, with an originally 6 × 9 matrix FB[(1)], an input signal vector

$$\mathbf{xb}_1^{(1)}$$

with a vector length 9 is compressed. When y = 1/4, using a 2 × 9 matrix

$$\widetilde{\mathbf{FB}}^{(1)},$$

$$\mathbf{xb}_1^{(1)}$$

of a vector length 9, and
a 2 × 9 matrix

$$\widetilde{\mathbf{Fx}}_1^{(1)},$$

$$\widetilde{\mathbf{Fx}}_1^{(1)} = \widetilde{\mathbf{FB}}^{(1)} \circ \mathbf{xb}_1^{(1)} = \begin{bmatrix} w_{1,1} & w_{1,2} & w_{1,3} & w_{1,4} & w_{1,5} & w_{1,6} & w_{1,7} & w_{1,8} & w_{1,9} \\ w_{2,1} & w_{2,2} & w_{2,3} & w_{2,4} & w_{2,5} & w_{2,6} & w_{2,7} & w_{2,8} & w_{2,9} \end{bmatrix} \circ \begin{bmatrix} x_1 & x_2 & x_3 & x_4 & x_5 & x_6 & x_7 & x_8 & x_9 \end{bmatrix}$$

$$= \begin{bmatrix} w_{1,1} \cdot x_1 & w_{1,2} \cdot x_2 & w_{1,3} \cdot x_3 & w_{1,4} \cdot x_4 & w_{1,5} \cdot x_5 & w_{1,6} \cdot x_6 & w_{1,7} \cdot x_7 & w_{1,8} \cdot x_8 & w_{1,9} \cdot x_9 \\ w_{2,1} \cdot x_1 & w_{2,2} \cdot x_2 & w_{2,3} \cdot x_3 & w_{2,4} \cdot x_4 & w_{2,5} \cdot x_5 & w_{2,6} \cdot x_6 & w_{2,7} \cdot x_7 & w_{2,8} \cdot x_8 & w_{2,9} \cdot x_9 \end{bmatrix} \cdots (9)$$

It is noted that, for simplicity, of the matrix

$$\widetilde{\mathbf{FB}}^{(1)},$$

the components are designated $w_{i,j}$, and of the vector

$$\mathbf{xb}_1^{(1)},$$

the elements are designated $x_j$.
Herein,

$$\widetilde{\mathbf{Fx}}_1^{(1),1} = \begin{bmatrix} w_{1,1} \cdot x_1 & w_{1,2} \cdot x_2 & w_{1,3} \cdot x_3 \\ w_{2,1} \cdot x_1 & w_{2,2} \cdot x_2 & w_{2,3} \cdot x_3 \end{bmatrix}$$

$$\widetilde{\mathbf{Fx}}_1^{(1),2} = \begin{bmatrix} w_{1,4} \cdot x_4 & w_{1,5} \cdot x_5 & w_{1,6} \cdot x_6 \\ w_{2,4} \cdot x_4 & w_{2,5} \cdot x_5 & w_{2,6} \cdot x_6 \end{bmatrix}$$

$$\widetilde{\mathbf{Fx}}_1^{(1),3} = \begin{bmatrix} w_{1,7} \cdot x_7 & w_{1,8} \cdot x_8 & w_{1,9} \cdot x_9 \\ w_{2,7} \cdot x_7 & w_{2,8} \cdot x_8 & w_{2,9} \cdot x_9 \end{bmatrix}.$$

Here, of

$$\widetilde{\mathbf{Fx}}_1^{(1),2},$$

the second row is permutated as follows:

$$\overline{\widetilde{\mathbf{Fx}}_1^{(1),2}}.$$

$$\overline{\widetilde{\mathbf{Fx}}_1^{(1),2}} = \begin{bmatrix} w_{1,4} \cdot x_4 & w_{1,5} \cdot x_5 & w_{1,6} \cdot x_6 \\ w_{2,5} \cdot x_5 & w_{2,6} \cdot x_6 & w_{2,4} \cdot x_4 \end{bmatrix}$$

Also, of

$$\widetilde{\mathbf{Fx}}_1^{(1),3},$$

the second row is shifted to the left by 2 columns by permutation, as follows:

$$\overline{\widetilde{\mathbf{Fx}}_1^{(1),3}}.$$

$$\overline{\widetilde{\mathbf{Fx}}_1^{(1),3}} = \begin{bmatrix} w_{1,7} \cdot x_7 & w_{1,8} \cdot x_8 & w_{1,9} \cdot x_9 \\ w_{2,9} \cdot x_9 & w_{2,7} \cdot x_7 & w_{2,8} \cdot x_8 \end{bmatrix}$$

As a result,

$$\mathbf{xb}_1^{(2)}$$

is computed as follows:

$$\mathbf{xb}_1^{(2)} = \widetilde{\mathbf{Fx}}_1^{(1),1} + \overline{\widetilde{\mathbf{Fx}}_1^{(1),2}} + \overline{\widetilde{\mathbf{Fx}}_1^{(1),3}}$$

$$= \begin{bmatrix} w_{1,1} \cdot x_1 + w_{1,4} \cdot x_4 + w_{1,7} \cdot x_7 & w_{1,2} \cdot x_2 + w_{1,5} \cdot x_5 + w_{1,8} \cdot x_8 & w_{1,3} \cdot x_3 + w_{1,6} \cdot x_6 + w_{1,9} \cdot x_9 \\ w_{2,1} \cdot x_1 + w_{2,5} \cdot x_5 + w_{2,9} \cdot x_9 & w_{2,2} \cdot x_2 + w_{2,6} \cdot x_6 + w_{2,7} \cdot x_7 & w_{2,3} \cdot x_3 + w_{2,4} \cdot x_4 + w_{2,8} \cdot x_8 \end{bmatrix} \cdots (10).$$

Note that, for simplicity,

$$\mathbf{\dot{x}b}_1^{(2)} = \dot{y} = \begin{bmatrix} y_1 & y_2 & y_3 \\ y_4 & y_5 & y_6 \end{bmatrix}.$$

This computing circuit is similar to the circuit for hardware implementation illustrated in Fig. 8.

When, for a permutation pattern from

$$\widetilde{\mathbf{Fx}}_i^{(l),k}$$

to

$$\overline{\widetilde{\mathbf{Fx}}_i^{(l),k}},$$

random permutation is used, the circuit becomes similar to that of Fig. 10.

Note that in the present embodiment, during the computation of

$$\mathbf{\dot{x}b}_i^{(l+1)} = \widetilde{\mathbf{Fx}}_i^{(l),1} + \overline{\widetilde{\mathbf{Fx}}_i^{(l),2}} : + \cdots + \overline{\widetilde{\mathbf{Fx}}_i^{(l),\lceil CN^{(l)} \cdot H^{(l)} \cdot H^{(l)} \cdot \gamma \rceil}},$$

the method has been described where

$$\widetilde{\mathbf{Fx}}_i^{(l),1}$$

is not permutated. However, this portion may be permutated.

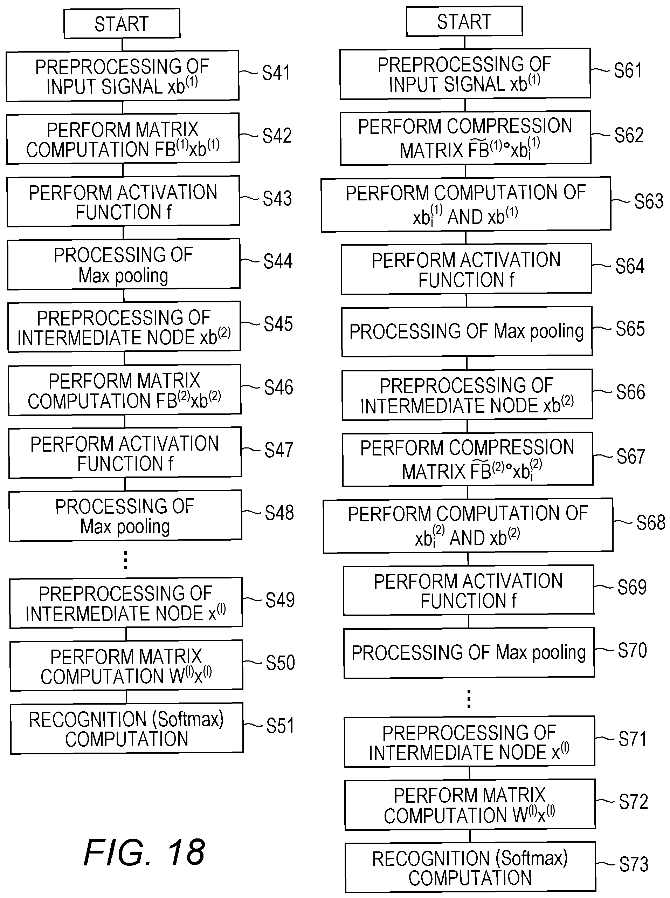

Fig. 18 compares a flowchart for performing the computation process of the present embodiment with that of the typical CNN. The steps S41 to S51 on the left of Fig. 18 relate to the flowchart for performing the typical CNN. The steps S61 to S73 on the right of Fig. 18 relate to the flowchart for performing the CNN of the present embodiment. The process of the present embodiment can be applied to the typical matrix computation portion.

Note that in the flowcharts of Fig. 18, Max Pooling is a function for extracting only the value that takes a maximum value in combinations of regions with a filter output. However, the typical system may be used for a part of matrix computation or the like that is used immediately before recognition computation (Softmax) for recognition.

First, the typical CNN execution process will be described. An input signal such as image data is generally handled as a vector of a combination of signals for each pixel.

Then, an input vector $x^{(1)}$ is transformed into a matrix $xb^{(1)}$ in accordance with a convolution rule, and preprocessing for normalization or quantization is performed (step S41).

Thereafter, as described with reference to Fig. 17(a), using the filter $FB^{(1)}$ for the initial layer $l = 1$ and $xb^{(1)}$, matrix multiplication of $FB^{(1)}$ and $xb^{(1)}$ is implemented (step S42). Then, the activation function f is performed (step S43), processing such as MAX pooling is performed (step S44), and the vector $x^{(2)}$ for the node of the next layer $1 = 2$ is obtained to configure $xb^{(2)}$.

This process is repeatedly performed (step S45 to S50).

In the example of Fig. 18, the process is repeated to the $1 = L$ layer, and finally computation such as Softmax is implemented for recognition (step S51).

Next, an example (on the right of Fig. 18) of application to the CNN that is the process of the present embodiment will be described.

First, preprocessing of the input signal is performed as in the typical example (step S61).

Then, the filter matrix

$$\widetilde{\widehat{FB}}^{(l)}$$

that has been compressed as described with reference to the matrix computation is used to implement computation of

$$\widetilde{\widehat{FB}}^{(l)} \circ \mathbf{xb}_i^{(l)}$$

(step S62), and thereafter,

$$\mathbf{\dot{xb}}_i^{(l+1)}$$

and

$$\mathbf{xb}^{(l+1)}$$

are performed (step S63). Further, the activation function f is performed (step S64).

Next, a process such as MAX pooling is performed (step S65).

Then, similar computation is performed (step S66 to S70) including the implementation of preprocessing and the activation function, for example, to the l = L-1 layer, and computation is performed (step S71 to S72) using a non-compressed matrix only for the l = L layer.

Then, computation such as Softmax is implemented for recognition (step S73).

In the example of Fig. 18, the method has been described where a non-compressed matrix is used for the l = L layer. However, the computation may be performed using a compressed matrix also for the l = L layer.

Furthermore, the computation of the present embodiment may be applied to only some of all the layers.

As described above, even when the weighting matrix is compressed, there is hardly any change in characteristics, and therefore the amount of computation can be reduced. The filter matrix is a representation of a part of a network structure, and compression of the filter matrix can be considered a network compression.

In the first embodiment and the second embodiment described above, network compression methods with respect to a DNN and a CNN have been described. In addition to the techniques of the embodiments, further compression may be performed.

Next, a technique for performing further compression in addition to the techniques of the first embodiment and the second embodiment will be described. Here, a description will be given based on the second embodiment.

In the second embodiment, the method has been described wherein the 4 × 12 matrix $FB^{(l)}$ with $CN^{(l)} \cdot H^{(l)} \cdot H^{(l)}$ = 3·2·2 = 12 and $CN^{(l+1)}$ = 4 is compressed at the compression ratio $\gamma$ = 1/2 into the 2 × 12 matrix

$$\widetilde{\widehat{FB}}^{(l)}.$$

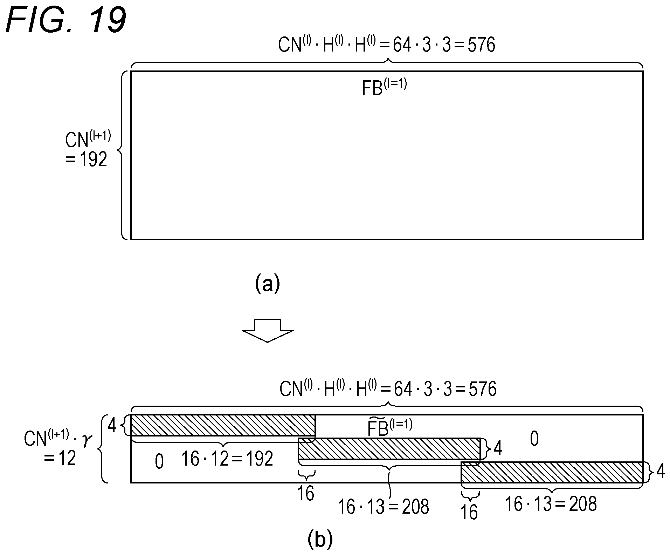

Here, a description will be given using a greater matrix $FB^{(l)}$. Let $CN^{(l)} \cdot H^{(l)} \cdot H^{(l)}$ = 64·3·3 = 576, and $CN^{(l+1)}$ = 192. Now, the matrix compression ratio is $\gamma$ = 1/16, the inside of the compressed matrix is turned into partial matrices, creating a matrix characterized in that the partial matrices are configured with their columns or rows partially overlapping. A concrete example is illustrated in Fig. 19. In the compressed 12 × 576 matrix

$$\widetilde{\widehat{FB}}^{(l)},$$

a 4 × (16·12) partial matrix is arranged in the upper left, a 4 × (16·13) partial matrix is arranged at the center, and a 4 × (16·13) partial matrix is arranged in the lower right. Here, the partial matrices do not have overlapping rows, but have overlapping columns.

In the present example, there is an overlap of $1/\gamma$ = 16 columns between the partial matrices. Computation of each of the partial matrices is in accordance with expressions (6), (7), (8), (9), and (10). By this technique, the amount of computation is further reduced such that

$$\gamma \cdot \frac{4 \cdot 192 + 4 \cdot 208 + 4 \cdot 208}{12 \cdot 576} = 0.021991$$
,

or to approximately 1/50. In this structure, it is also possible to avoid the generation of the same equations even if the weights have values such as -1 and 1 during computation according to expression (9). Accordingly, effects similar to those of the first embodiment or the second embodiment can be expected. This computation process may be implemented using the circuit configurations illustrated in Fig. 8 and Fig. 10 for each partial matrix.

Thus, with the network compression method of the present invention, it is possible, whether in a DNN or a CNN, to reduce the amount of computation greatly in accordance with the compression ratio $\gamma$ and the creation of a partial matrix, and, even when compressed as shown in Table 1, substantially equivalent accuracy rates can be achieved. Accordingly, it is possible to obtain the effect that lower-priced and lower power-consumption CPUs, general-purpose FPGAs and the like can be used for implementation.

Also, in the present implementation example, the generation of the same equations is avoided by adopting a means for making a combination rule such that, when determining $x^{(l+1)}$, in the weighting matrix $W^{(l)}$ and the vector $x^{(l)}$, instead of taking the sum of the products of the components of each row of the weighting matrix $W^{(l)}$ and all of the elements of the vector $x^{(l)}$, the sum of the products of some of the elements is taken so that the equations do not correspond. Thus, the inventive method is applicable as long as it is possible to perform computation for generating the combination avoiding corresponding equations.

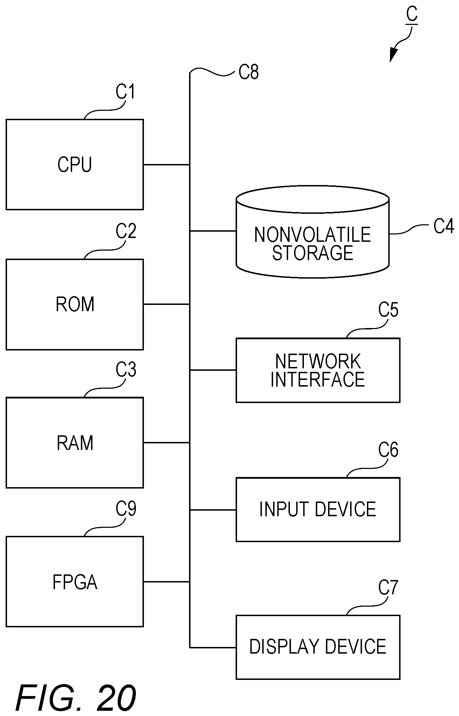

Here, fig. 20 illustrates an example of a hardware configuration of a computer device which is an information processing device for performing the computation process according to each embodiment of the present invention.

The computer device C illustrated in Fig. 20 has a bus C8 to which a central processing unit (CPU) C1, a read only memory (ROM) C2, and a random access memory (RAM) C3 are connected. Further, the computer device C further includes a nonvolatile storage C4, a network interface C5, an input device C6, and a display device C7. Also, a field-programmable gate array (FPGA) C9 may also be provided as needed.

The CPU C1 reads, from the ROM C2, a program code of software for achieving the functions of the information processing system device of the present example, and performs the program code. Variables, parameters, and the like generated during a computation process are temporarily written to the RAM C3. For example, the CPU C1 reads a program stored in the ROM C2, whereby the computation processes for the DNN or CNN that have been described are performed. It is also possible to implement some or all of the DNN or CNN in the FPGA C9 to implement the computation processes. When the FPGA is used, the effect of a decrease in power consumption and high-speed computation can be achieved.

The nonvolatile storage C4 includes a hard disk drive (HDD), a solid state drive (SSD), and the like. In the nonvolatile storage C4, an operating system (OS), various parameters, programs for performing a DNN or a CNN, and the like are recorded.

The network interface C5 may be used for the input/output of various data via a terminal-connected local area network (LAN), a dedicated line, and the like. For example, the network interface C5 receives an input signal for performing computation for the DNN or CNN. Also, the results of computation in the DNN or CNN are transmitted to an external terminal device via the network interface C5.

The input device C6 is configured from a keyboard and the like.

The display device C7 displays computation results and the like.

In the foregoing embodiments, the examples of a DNN and a CNN have been described. However, the present invention is applicable to any system in which dimensional compression or compression sensing of input data is performed by artificial intelligence or machine learning having a network structure in a part thereof, such as general neural networks or recurrent neural networks (RNN), or by matrix computation.

DESCRIPTION OF REFERENCE SIGNS

C    Computer device
C1   CPU
C2   ROM
C3   RAM

C4    Nonvolatile storage
C5    Network interface
C6    Input device
C7    Display device
C8    Bus
C9    FPGA

**Claims**

1. An information processing device comprising a computation processing unit for achieving an artificial intelligence function by performing computation of a neural network with respect to input data, wherein the computation processing unit:

   makes a number of rows or a number of columns of a weighting matrix for computing a network connecting nodes in the neural network a number of rows or a number of columns reduced from a number of rows or a number of columns determined by input data or output data; and
   takes a sum of products of a weight component of the reduced number of rows or number of columns and some of elements of a vector of the input data, and configures equations all having different combinations.

2. An information processing device comprising a computation processing unit for achieving an artificial intelligence function by performing computation of a neural network with respect to input data, wherein the computation processing unit:

   makes a number of rows or a number of columns of a weighting matrix for computing a network connecting nodes in the neural network a number of rows or a number of columns reduced from a number of rows or a number of columns determined by input data or output data; and
   multiplies a weight component of the reduced number of rows or number of columns with a vector of the input data, divides a matrix of a result of the multiplication into a partial matrix for every certain number of columns or number of rows, and takes a sum of matrices for every partial matrix obtained by the dividing.

3. The information processing device according to claim 2, wherein an arbitrary permutation operation is added to every partial matrix.

4. An information processing method, wherein an information processing device comprises a computation processing unit for achieving an artificial intelligence function by performing computation of a neural network with respect to input data, and wherein the computation processing unit:

   makes a number of rows or a number of columns of a weighting matrix for computing a network connecting nodes in the neural network a number of rows or a number of columns reduced from a number of rows or a number of columns determined by input data or output data; and
   takes a sum of products of a weight component of the reduced number of rows or number of columns and some of elements of a vector of the input data, and configures equations all having different combinations.

5. An information processing method, wherein a computation processing method for achieving an artificial intelligence function by performing computation of a neural network with respect to input data comprises:

   a reducing step of making a number of rows or a number of columns of a weighting matrix for computing a network connecting nodes in the neural network a number of rows or a number of columns reduced from a number of rows or a number of columns determined by input data or output data;
   a multiplication step of multiplying a weight component of the number of rows or the number of columns reduced in the reducing step with a vector of the input data;
   a dividing step of dividing a matrix of a result obtained in the multiplication step into a partial matrix for every certain number of columns or number of rows; and
   a sum-computing step of taking a sum of matrices for every partial matrix obtained by the dividing in the dividing step.

**6.** The information processing method according to claim 5, wherein an arbitrary permutation operation is added to every partial matrix.

FIG. 1

FIG. 2

FIG. 3

## FIG. 4

## FIG. 5

## FIG. 6

## FIG. 7

$$\widetilde{W}_1^{(1)} \circ X_1^{(1)} = \begin{bmatrix} W_{1,1} \cdot X_1 & W_{1,2} \cdot X_2 & W_{1,3} \cdot X_3 \\ W_{2,1} \cdot X_1 & W_{2,2} \cdot X_2 & W_{2,3} \cdot X_3 \end{bmatrix}$$

$$\overline{\widetilde{W}_2^{(1)} \circ X_2^{(1)}} = \begin{bmatrix} W_{1,4} \cdot X_4 & W_{1,5} \cdot X_5 & W_{1,6} \cdot X_6 \\ W_{2,5} \cdot X_5 & W_{2,6} \cdot X_6 & W_{2,4} \cdot X_4 \end{bmatrix} \longleftarrow \text{SHIFT 2ND ROW TO LEFT BY 1 COLUMN}$$

$$\overline{\widetilde{W}_3^{(1)} \circ X_3^{(1)}} = \begin{bmatrix} W_{1,7} \cdot X_7 & W_{1,8} \cdot X_8 & W_{1,9} \cdot X_9 \\ W_{2,9} \cdot X_9 & W_{2,7} \cdot X_7 & W_{2,8} \cdot X_8 \end{bmatrix} \longleftarrow \text{SHIFT 2ND ROW TO LEFT BY 2 COLUMNS}$$

## FIG. 8

# FIG. 9

$$\widetilde{W}_1^{(1)} \circ x_1^{(1)} = \begin{bmatrix} w_{1,1} \cdot x_1 & w_{1,2} \cdot x_2 & w_{1,3} \cdot x_3 \\ w_{2,1} \cdot x_1 & w_{2,2} \cdot x_2 & w_{2,3} \cdot x_3 \end{bmatrix}$$

$$\overline{\widetilde{W}_2^{(1)} \circ x_2^{(1)}} = \begin{bmatrix} w_{1,5} \cdot x_5 & w_{1,4} \cdot x_4 & w_{1,6} \cdot x_6 \\ w_{2,4} \cdot x_4 & w_{2,6} \cdot x_6 & w_{2,5} \cdot x_5 \end{bmatrix}$$

$$\overline{\widetilde{W}_3^{(1)} \circ x_3^{(1)}} = \begin{bmatrix} w_{1,8} \cdot x_8 & w_{1,9} \cdot x_9 & w_{1,7} \cdot x_7 \\ w_{2,9} \cdot x_9 & w_{2,7} \cdot x_7 & w_{2,8} \cdot x_8 \end{bmatrix}$$

PERMUTATE BOTH 1ST AND 2ND ROWS RANDOMLY

# FIG. 10

EP 3 637 323 A1

# FIG. 11

```
        START                              START
          │                                  │
PREPROCESSING OF      ~S11    PREPROCESSING OF      ~S21
INPUT SIGNAL x^(1)            INPUT SIGNAL x^(1)
          │                                  │
PERFORM MATRIX        ~S12    PERFORM COMPRESSION   ~S22
COMPUTATION W^(1)x^(1)        MATRIX W̃^(1)∘x^(1)
          │                                  │
PERFORM ACTIVATION    ~S13    PERFORM               ~S23
FUNCTION f                   W̃_1^(1)∘x_1^(1)+W̃_2^(1)∘x_2^(1)+⋯+W̃_{[N·γ]}^(1)∘x_{[N·γ]}^(1)
          │                                  │
PREPROCESSING OF      ~S14    PERFORM ACTIVATION FUNCTION f   ~S24
INTERMEDIATE NODE x^(2)                       │
          │                   PREPROCESSING OF      ~S25
PERFORM MATRIX        ~S15    INTERMEDIATE NODE x^(2)
COMPUTATION W^(2)x^(2)                         │
          │                   PERFORM COMPRESSION   ~S26
PERFORM ACTIVATION    ~S16    MATRIX W̃^(2)∘x^(2)
FUNCTION f                                     │
          ⋮                   PERFORM               ~S27
PREPROCESSING OF      ~S17    W̃_1^(2)∘x_1^(2)+W̃_2^(2)∘x_2^(2)+⋯+W̃_{[N·γ]}^(2)∘x_{[N·γ]}^(2)
INTERMEDIATE NODE x^(l=L)                       │
          │                   PERFORM ACTIVATION FUNCTION f   ~S28
PERFORM MATRIX        ~S18                      ⋮
COMPUTATION W^(l=L)x^(l=L)    PREPROCESSING OF      ~S29
          │                   INTERMEDIATE NODE x^(l)
RECOGNITION (Softmax) ~S19                      │
COMPUTATION                   PERFORM MATRIX        ~S30
                             COMPUTATION W^(l)x^(l)
                                               │
                             RECOGNITION (Softmax) ~S31
                             COMPUTATION
```

# FIG. 12

**DNN(MNIST) COMPRESSION RATE vs ACCURACY RATE**

acc: TEST DATA ACCURACY RATE (y-axis: 70, 75, 80, 85, 90, 95, 100)

$\gamma$: COMPRESSION RATE (x-axis: 1, 1/3, 1/5, 1/12, 1/25, 1/50, 1/78, 1/112)

FIG. 13

FIG. 14

# FIG. 15

$$FB^{(1)} = \begin{bmatrix} f_{1,1}^{1,1} & f_{1,2}^{1,1} & f_{2,1}^{1,1} & f_{2,2}^{1,1} & f_{1,1}^{2,1} & f_{1,2}^{2,1} & f_{2,1}^{2,1} & f_{2,2}^{2,1} & f_{1,1}^{3,1} & f_{1,2}^{3,1} & f_{2,1}^{3,1} & f_{2,2}^{3,1} \\ f_{1,1}^{1,2} & f_{1,2}^{1,2} & f_{2,1}^{1,2} & f_{2,2}^{1,2} & f_{1,1}^{2,2} & f_{1,2}^{2,2} & f_{2,1}^{2,2} & f_{2,2}^{2,2} & f_{1,1}^{3,2} & f_{1,2}^{3,2} & f_{2,1}^{3,2} & f_{2,2}^{3,2} \\ f_{1,1}^{1,3} & f_{1,2}^{1,3} & f_{2,1}^{1,3} & f_{2,2}^{1,3} & f_{1,1}^{2,3} & f_{1,2}^{2,3} & f_{2,1}^{2,3} & f_{2,2}^{2,3} & f_{1,1}^{3,3} & f_{1,2}^{3,3} & f_{2,1}^{3,3} & f_{2,2}^{3,3} \\ f_{1,1}^{1,4} & f_{1,2}^{1,4} & f_{2,1}^{1,4} & f_{2,2}^{1,4} & f_{1,1}^{2,4} & f_{1,2}^{2,4} & f_{2,1}^{2,4} & f_{2,2}^{2,4} & f_{1,1}^{3,4} & f_{1,2}^{3,4} & f_{2,1}^{3,4} & f_{2,2}^{3,4} \end{bmatrix} \begin{matrix} C(2)=1 \\ C(2)=2 \\ C(2)=3 \\ C(2)=4 \end{matrix}$$

$$\underbrace{\phantom{xxxxx}}_{C(1)=1} \underbrace{\phantom{xxxxx}}_{C(1)=2} \underbrace{\phantom{xxxxx}}_{C(1)=3}$$

# FIG. 16

(a)

(b)

(a)

(b)

# FIG. 17

START

PREPROCESSING OF INPUT SIGNAL xb$^{(1)}$ — S41

PERFORM MATRIX COMPUTATION FB$^{(1)}$xb$^{(1)}$ — S42

PERFORM ACTIVATION FUNCTION f — S43

PROCESSING OF Max pooling — S44

PREPROCESSING OF INTERMEDIATE NODE xb$^{(2)}$ — S45

PERFORM MATRIX COMPUTATION FB$^{(2)}$xb$^{(2)}$ — S46

PERFORM ACTIVATION FUNCTION f — S47

PROCESSING OF Max pooling — S48

⋮

PREPROCESSING OF INTERMEDIATE NODE x$^{(l)}$ — S49

PERFORM MATRIX COMPUTATION W$^{(l)}$x$^{(l)}$ — S50

RECOGNITION (Softmax) COMPUTATION — S51

*FIG. 18*

START

PREPROCESSING OF INPUT SIGNAL xb$^{(1)}$ — S61

PERFORM COMPRESSION MATRIX $\overline{FB}^{(1)}$°xb$_i^{(1)}$ — S62

PERFORM COMPUTATION OF xb$_i^{(1)}$ AND xb$^{(1)}$ — S63

PERFORM ACTIVATION FUNCTION f — S64

PROCESSING OF Max pooling — S65

PREPROCESSING OF INTERMEDIATE NODE xb$^{(2)}$ — S66

PERFORM COMPRESSION MATRIX $\overline{FB}^{(2)}$°xb$_i^{(2)}$ — S67

PERFORM COMPUTATION OF xb$_i^{(2)}$ AND xb$^{(2)}$ — S68

PERFORM ACTIVATION FUNCTION f — S69

PROCESSING OF Max pooling — S70

⋮

PREPROCESSING OF INTERMEDIATE NODE x$^{(l)}$ — S71

PERFORM MATRIX COMPUTATION W$^{(l)}$x$^{(l)}$ — S72

RECOGNITION (Softmax) COMPUTATION — S73

*FIG. 19*

$$CN^{(l)} \cdot H^{(l)} \cdot H^{(l)} = 64 \cdot 3 \cdot 3 = 576$$

$FB^{(l=1)}$

$CN^{(l+1)} = 192$

(a)

$$CN^{(l)} \cdot H^{(l)} \cdot H^{(l)} = 64 \cdot 3 \cdot 3 = 576$$

$\widetilde{FB}^{(l=1)}$

$CN^{(l+1)} \cdot \gamma = 12$

4

0   $16 \cdot 12 = 192$

16

4

$16 \cdot 13 = 208$

0

16

4

$16 \cdot 13 = 208$

(b)

C

C8

C1

CPU

C2

ROM

C3

RAM

C9

FPGA

NONVOLATILE
STORAGE

C4

NETWORK
INTERFACE

C5

INPUT DEVICE

C6

DISPLAY DEVICE

C7

*FIG. 20*

## INTERNATIONAL SEARCH REPORT

| International application No. |
|---|
| PCT/JP2018/014304 |

**A. CLASSIFICATION OF SUBJECT MATTER**
Int.Cl. G06N3/02(2006.01)i

According to International Patent Classification (IPC) or to both national classification and IPC

**B. FIELDS SEARCHED**

Minimum documentation searched (classification system followed by classification symbols)
Int.Cl. G06N3/02

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | 松本 渉, 深層学習での演算量削減技術, 三菱電機技報, 20 June 2017, vol. 91, no. 6, pp. 51-54, (MATSUMOTO, Wataru, Computational complexity reduction technology for deep learning, Mitsubishi Denki Giho) | 1-6 |
| A | JP 2016-66269 A (KDDI CORPORATION) 28 April 2016 (Family: none) | 1-6 |
| A | JP 5-346914 A (MATSUSHITA ELECTRON CORP.) 27 December 1993 (Family: none) | 1-6 |

☐ Further documents are listed in the continuation of Box C.      ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24.05.2018 | 05.06.2018 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**REFERENCES CITED IN THE DESCRIPTION**

**Non-patent literature cited in the description**

- **COATES ; ADAM ; HUVAL ; BRODY ; WANG ; TAO ; WU ; DAVID ; CATANZARO ; BRYAN.** Deep learning with cots hpc systems. *Proceedings of The 30th International Conference on Machine Learning,* 2013, 1337-1345

- **R. VERSHYNIN.** On the role of sparsity in Compressed Sensing and Random Matrix Theory. *CAMSAP' 09 (3rd International Workshop on Computational Advances in Multi-Sensor Adaptive Processing),* 2009, 189-192